# FASCICULE DE BREVET EUROPEEN

(11) **EP 3 630 909 B1**
(45) Date de publication et mention de la délivrance du brevet: **08.05.2024**
(21) Numéro de dépôt: 18726506.1
(22) Date de dépôt: 31.05.2018
(51) Int. Cl.: C09K 5/04, C10M 171/00, C10N 20/00

(54) **COMPOSITIONS A BASE DE TRIFLUOROETHYLENE ET LEURS UTILISATIONS**
ZUSAMMENSETZUNGEN AUF TRIFLUORETHYLENBASIS UND VERWENDUNGEN DAVON
TRIFLUOROETHYLENE-BASED COMPOSITIONS AND USES THEREOF

(30) Priorité: 02.06.2017 FR 1754923
(43) Date de publication de la demande: 08.04.2020
(73) Titulaire: Arkema France, 92700 Colombes (FR)
(72) Inventeur: RACHED, Wissam, 69630 Chaponost (FR)
(74) Mandataire: Arkema Patent
(86) Numéro de dépôt international: PCT/EP2018/064360
(87) Numéro de publication internationale: WO 2018/220127

(56) Documents cités:
- WO-A1-2016/190177
- US-A1- 2015 337 191
- US-A1- 2016 075 927
- US-A1- 2016 369 147

## Description

### DOMAINE DE L'INVENTION

La présente invention concerne des compositions à base de trifluoroéthylène, et leurs utilisations comme fluide de transfert de chaleur, notamment dans la réfrigération, climatisation et pompe à chaleur.

### ARRIERE-PLAN TECHNIQUE

Les fluides à base de composés fluorocarbonés sont largement utilisés dans les systèmes de transfert de chaleur par compression de vapeur, notamment les dispositifs de climatisation, de pompe à chaleur, de réfrigération ou de congélation. Ces dispositifs ont en commun de reposer sur un cycle thermodynamique comprenant la vaporisation du fluide à basse pression (dans laquelle le fluide absorbe de la chaleur) ; la compression du fluide vaporisé jusqu'à une pression élevée ; la condensation du fluide vaporisé en liquide à pression élevée (dans laquelle le fluide rejette de la chaleur) ; et la détente du fluide pour terminer le cycle.

Le choix d'un fluide de transfert de chaleur (qui peut être un composé pur ou un mélange de composés) est dicté d'une part par les propriétés thermodynamiques du fluide, et d'autre part par des contraintes supplémentaires. Ainsi, un critère particulièrement important est celui de l'impact du fluide considéré sur l'environnement. En particulier, les composés chlorés (chlorofluorocarbures et hydrochlorofluorocarbures) présentent le désavantage d'endommager la couche d'ozone. On leur préfère donc désormais généralement les composés non chlorés tels que les hydrofluorocarbures, les fluoroéthers et les fluorooléfines.

Des fluides de transfert de chaleur actuellement utilisés sont le HFC-134a, le R404A (mélange ternaire de 52 % de HFC-143a, de 44 % de HFC-125 et de 4 % de HFC-134a), le R452A (mélange ternaire de 11 % de HFC-32, de 59 % de HFC-125 et de 30 % de HFO-1234yf), le R407C (mélange ternaire de 52 % de HFC-134a, de 25 % de HFC-125 et de 23 % de HFC-32)....

Toutefois, il existe un besoin constant de mettre au point d'autres fluides de transfert de chaleur présentant au moins l'un des avantages suivants : un potentiel de réchauffement global (GWP) inférieur à celui des fluides ci-dessus, et/ou présentant des performances équivalentes et de préférence améliorées, et/ou présentant un faible glissement de température à l'évaporateur, et/ou présentant une faible température de sortie au compresseur, et/ou étant peu ou non inflammables.

### DESCRIPTION DE L'INVENTION

La présente invention concerne une composition comprenant :
- le trifluoroéthylène (R1123) ;
- le pentafluoroéthane (HFC-125) ; et
- au moins un composé C choisi dans le groupe constitué du difluorométhane (HFC-32), du 1,1,1-trifluoropropène (HFO-1243zf), du trifluoroéthane (HFC-143a), du 1,1,1,2-tétrafluoroéthane (HFC-134a), du monofluoroéthane (HFC-161), du 1,1,1,4,4,4-hexafluorobut-2-ène (HFO-1336mmz, isomère E ou Z), du 1-chloro-trifluoropropène (HFO-1233zd), du 3,3,4,4,4-pentafluorobut-1-ène (HFO-1345fz), du 2,4,4,4-tétrafluorobut-1-ène (HFO-1354mfy), du 1,1,1,3,3-pentafluoropropane (HFC-245fa), du 2,3,3,3-tétrafluoropropène (HFO-1234yf), du 1,1,2,2-tétrafluoroéthane (HFC-134), du 1,1-difluoroéthane (HFC-152a), du 1,1,1,2,3,3,3 heptafluoropropane (HFC-227ea), du 1,1,1,3,3-pentafluorobutane (HFC-365mfc), du butane (HC-600), du 2-méthylbutane (HC-601a), du pentane (HC-601), du propane, et de leurs mélanges, caractérisé en ce que ladite composition a un GWP inférieur à 500 et en ce que la teneur pondérale en composé(s) C est supérieure ou égale à 60%.

Selon l'invention, la composition peut comprendre un composé C ou un mélange de composés C.

De préférence, la composition susmentionnée consiste essentiellement en, en particulier consiste en :
- trifluoroéthylène (R1123) ;
- pentafluoroéthane (HFC-125) ; et
- au moins un composé C choisi dans le groupe constitué du difluorométhane (HFC-32), du 1,1,1-trifluoropropène (HFO-1243zf), du trifluoroéthane (HFC-143a), du 1,1,1,2-tétrafluoroéthane (HFC-134a), du monofluoroéthane (HFC-161), du 1,1,1,4,4,4-hexafluorobut-2-ène (HFO-1336mmz, isomère E ou Z), du 3,3,4,4,4-pentafluorobut-1-ène (HFO-1345fz), du 2,4,4,4-tétrafluorobut-1-ène (HFO-1354mfy), du 1,1,1,3,3-pentafluoropropane (HFC-245fa), du 2,3,3,3-tétrafluoropropène (HFO-1234yf), du 1,1,2,2-tétrafluoroéthane (HFC-134), du 1,1-difluoroéthane (HFC-152a), du 1,1,1,3,3-pentafluorobutane (HFC-365mfc), du butane (HC-600), du 2-méthylbutane (HC-601a), du pentane (HC-601), du propane, et de leurs mélanges.

Des impuretés peuvent être présentes dans de telles compositions, à raison par exemple de moins de 1%, de préférence de moins de 0,5%, de préférence de moins de 0,1 %, préférentiellement de moins de 0,05%, et en particulier de moins de 0,01 %. Ces impuretés n'ont pas d'impact significatif sur les propriétés des compositions.

Selon un mode de réalisation, la composition susmentionnée comprend (de préférence consiste essentiellement en, préférentiellement consiste en) :
- le trifluoroéthylène (R1123) ;
- le pentafluoroéthane (HFC-125) ; et
- au moins un composé C choisi dans le groupe constitué du 1,1,1,2-tétrafluoroéthane (HFC-134a), du 2,3,3,3-tétrafluoropropène (HFO-1234yf), du 1,1,2,2-tétrafluoroéthane (HFC-134), du 1,1-difluoroéthane (HFC-152a), et de leurs mélanges.

De préférence, la composition susmentionnée comprend (de préférence consiste essentiellement en, préférentiellement consiste en) :
- le trifluoroéthylène (R1123) ;
- le pentafluoroéthane (HFC-125) ; et
- au moins un composé C choisi dans le groupe constitué du 1,1,1,2-tétrafluoroéthane (HFC-134a), du 2,3,3,3-tétrafluoropropène (HFO-1234yf), et de leurs mélanges.

La teneur pondérale en trifluoroéthylène (R1123) dans la composition selon l'invention peut être comprise par exemple entre 5% et 40%, 5% et 35%, 5% et 30%, 5% et 25%, 5% et 20%, 5% et 15%, 5% et 10%, 10% et 40%, 10% et 35%, 10% et 30%, 10% et 25%, 10% et 20%, 10% et 15%, 15% et 40%, 15% et 35%, 15% et 30%, 15% et 25%, 15% et 20%, 20% et 40%, 20% et 35%, 20% et 30%, 20% et 25%, 25% et 40%, 25% et 35%, 25% et 30%, 30% et 40%, 30% et 35%, 35% et 40%

Selon l'invention, les pourcentages en poids sont par rapport au poids total de la composition.

La teneur pondérale en trifluoroéthylène (R1123) dans la composition peut être supérieure ou égale à 5%, de préférence supérieure ou égale à 10%, de préférence supérieure ou égale à 15%, avantageusement supérieure ou égale à 20%, par exemple supérieure ou égale à 25%, préférentiellement supérieure ou égale à 30%.

De préférence, la teneur pondérale en trifluoroéthylène (R1123) dans la composition est choisie parmi l'une des teneurs suivantes : 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40% en poids par rapport au poids total de la composition.

La teneur pondérale en pentafluoroéthane (HFC-125) dans la composition peut être comprise par exemple entre 1% et 40%, 1% et 35%, 1% et 30%, 1% et 25%, 1% et 20%, 1% et 15%, 1% et 10%, 2% et 40%, 2% et 35%, 2% et 30%, 2% et 25%, 2% et 20%, 2% et 15%, 2% et 10%, 3% et 40%, 3% et 35%, 3% et 30%, 3% et 25%, 3% et 20%, 3% et 15%, 3% et 10%, 4% et 40%, 4% et 35%, 4% et 30%, 4% et 25%, 4% et 20%, 4% et 15%, 4% et 10%, 5% et 40%, 5% et 35%, 5% et 30%, 5% et 25%, 5% et 20%, 5% et 15%, 5% et 10%, 10% et 40%, 10% et 35%, 10% et 30%, 10% et 25%, 10% et 20%, 10% et 15%, 15% et 40%, 15% et 35%, 15% et 30%, 15% et 25%, 15% et 20%, 20% et 40%, 20% et 35%, 20% et 30%, 20% et 25%, 25% et 40%, 25% et 35%, 25% et 30%, 30% et 40%, 30% et 35%, 35% et 40%

La teneur pondérale en pentafluoroéthane (HFC-125) dans la composition peut être supérieure ou égale à 1%, de préférence supérieure ou égale à 5%, de préférence supérieure ou égale à 10%, avantageusement supérieure ou égale à 15%, par exemple supérieure ou égale à 20%, préférentiellement supérieure ou égale à 30%.

De préférence, la teneur pondérale en pentafluoroéthane (HFC-125) dans la composition est choisie parmi l'une des teneurs suivantes : 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40% en poids par rapport au poids total de la composition.

La teneur pondérale en composé(s) C dans la composition peut être comprise par exemple entre 60% et 95%, 60% et 90%, 60% et 85%, 60% et 80%, 60% et 75%, 60% et 70%, 60% et 65%, 65% et 95% , 65% et 90%, 65% et 85%, 65% et 80%, 65% et 75%, 65% et 70%, 70% et 95%, 70% et 90%, 70% et 85%, 70% et 80%, 70% et 75%, 75% et 95%, 75% et 90%, 75% et 85%, 75% et 80%, 80% et 95%, 80% et 90%, 80% et 85%, 85% et 95%, ou entre 85% et 90%.

Selon un mode de réalisation, la teneur pondérale en en composé(s) C dans la composition est supérieure ou égale à 70%, par exemple supérieure ou égale à 80%.

De préférence, la teneur pondérale en composé(s) C dans la composition est choisie parmi l'une des teneurs suivantes : 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, ou 90% en poids par rapport au poids total de la composition.

De préférence, la composition susmentionnée comprend (de préférence consiste essentiellement en, préférentiellement consiste en) :
- de 5% à 35% en poids de trifluoroéthylène (R1123) ;
- de 1% à 10% en poids de pentafluoroéthane (HFC-125) ; et
- de 60% à 90% en poids d'au moins un composé C tel que défini ci-dessus, ledit composé C étant de préférence choisi dans le groupe constitué du 1,1,1,2-tétrafluoroéthane (HFC-134a), du 2,3,3,3-tétrafluoropropène (HFO-1234yf), et de leurs mélanges.

Les compositions selon l'invention peuvent être préparées par tout procédé connu, tel que par exemple par simple mélange des différents composés les uns aux autres.

Les compositions selon l'invention ont un GWP inférieur ou égal à 500, de préférence inférieur ou égal à 200, en particulier inférieur ou égal à 150. Le GWP peut être calculé selon les indications fournies par le 4^{ème} rapport du Groupe d'experts intergouvernemental sur l'évolution du climat (GIEC). Le GWP des mélanges est en particulier calculé en fonction de la concentration massique et le GWP de chaque composant. Les GWP des composés purs sont typiquement listés dans la Directive Européenne F-Gas (Réglement (EU) No 517/2014 du parlement européen et du conseil, du 16 Avril 2014).

Les compositions selon l'invention sont avantageusement stables thermiquement, seules ou en combinaison avec des additifs tels que les lubrifiants.

Les compositions selon l'invention sont avantageusement peu ou non inflammables.

Selon l'invention, les compositions ont avantageusement une limite inférieure d'inflammabilité supérieure à 200 g/m³.

De préférence, les compositions conduisent avantageusement à une composition WCFF ayant une limite inférieure d'inflammabilité supérieure à 230 g/m³, de préférence supérieure ou égale à 250 g m³, en particulier supérieure ou égale à 280 g/m³.

Des compositions préférées, ainsi que les WCF et WCFF correspondantes, ont une chaleur de combustion (HOC) inférieure à 19 000 kJ/m³. La chaleur de combustion selon l'invention est définie et déterminée tel qu'indiqué dans la norme ASHRAE 34-2013.

La « limite inférieure d'inflammabilité » est définie dans la norme ASHRAE 34-2013 comme étant la concentration minimale d'une composition capable de propager une flamme à travers un mélange homogène de la composition et d'air, dans des conditions de tests spécifiés dans la norme ASTM E681-04. Elle peut être donnée par exemple en kg/m³ ou en %vol.

Une composition dite « WCF » (« worst case of formulation forflammability ») est définie dans la norme ASHRAE 34-2013, comme étant une composition de formulation dont la vitesse de propagation de flamme est la plus élevée. Cette composition est très proche de la composition nominale (ladite composition nominale correspondant dans le cadre de l'invention à une composition selon l'invention) avec une certaine tolérance.

Une composition dite WCFF (« worst case of fractionation for flammability ») est définie dans la norme ASHRAE 34-2013, comme étant la composition dont la vitesse de propagation de flamme est la plus élevée. Cette composition est déterminée suivant une méthode bien définie dans la même norme.

Dans le cadre de la présente invention, l'inflammabilité, la vitesse de propagation de flammes et la limite inférieure d'inflammabilité sont définies et déterminées selon le test figurant dans la norme ASHRAE 34-2013, qui renvoi à la norme ASTM E681 pour ce qui est de l'appareillage utilisé.

En ce qui concerne la vitesse de propagation de flamme, la méthode des essais décrite dans la norme ASHRAE 34-2013 est celle développée dans la thèse de T. Jabbour, « Classification de l'inflammabilité des fluides frigorigènes basée sur la vitesse fondamentale de flamme » sous la direction de Denis Clodic. Thèse, Paris, 2004. Le dispositif expérimental utilise en particulier la méthode de tube en verre verticale (nombre de tube 2, longueur 150 cm, diamètre 40 cm). L'utilisation de deux tubes permet de faire deux tests avec la même concentration en même temps. Les tubes sont notamment dotés d'électrodes en tungstène, ces dernières sont placées au fond de chaque tube, distant de 6,35mm (1/4 inch) et sont reliées à un générateur de 15kV et 30mA.

Les différentes compositions testées sont qualifiées d'inflammables ou de non inflammables en tant que telles, selon les critères définis dans la norme ASHRAE 34-2013.

Des compositions préférées ont avantageusement une vitesse de propagation de flamme inférieure à 10 cm/s, de préférence inférieure ou égale à 8 cm/s, préférentiellement inférieure ou égale à 6 cm/s, avantageusement inférieure ou égale à 5 cm/s, très avantageusement inférieure ou égale à 4 cm/s, inférieure ou égale à 3, inférieure ou égale à 2, inférieure ou égale à 1.5.

Des compositions préférées sont avantageusement classée 2L selon la norme ASHRAE 34-2013. Suivant cette norme, la classification 2L nécessite une vitesse de propagation de flamme inférieure à 10 cm/s.

Des compositions préférées présentent avantageusement un bon compromis entre bonnes performances énergétiques, inflammabilité faible ou nulle, et faible GWP, de préférence un GWP inférieur à 200.

Du fait de leur faible inflammabilité, les compositions préférées sont avantageusement plus sûres lorsqu'elles sont utilisées comme fluides de transfert de chaleur en réfrigération, climatisation et pour le chauffage. De plus, les installations de transfert de chaleur (réfrigération, air-conditionné, pompe à chaleur ...) peuvent comprendre avantageusement des charges plus élevées en composition selon l'invention, en raison de leur faible inflammabilité. En ce qui concerne les limites de charge, on peut typiquement faire référence à la norme EN378 publiée en 2008-2009.

### R1123/HFC-125/HFC-134a

Selon un mode de réalisation préféré, le composé C tel que défini ci-dessus est le 1,1,1,2-tétrafluoroéthane (HFC-134a).

La composition selon l'invention peut comprendre (de préférence peut consister essentiellement en, préférentiellement peut consister en) :
- le trifluoroéthylène (R1123) ;
- le pentafluoroéthane (HFC-125) ; et
- le 1,1,1,2-tétrafluoroéthane (HFC-134a).

De préférence, la teneur pondérale en trifluoroéthylène (R1123) dans la composition est comprise par exemple entre 5% et 40%, 5% et 35%, 5% et 30%, 5% et 25%, 5% et 20%, 5% et 15%, 5% et 10%, 10% et 40%, 10% et 35%, 10% et 30%, 10% et 25%, 10% et 20%, 10% et 15%, 15% et 40%, 15% et 35%, 15% et 30%, 15% et 25%, 15% et 20%, 20% et 40%, 20% et 35%, 20% et 30%, 20% et 25%, 25% et 40%, 25% et 35%, 25% et 30%, 30% et 40%, 30% et 35%, 35% et 40%.

Selon un mode de réalisation, la teneur pondérale en trifluoroéthylène (R1123) dans la composition est supérieure ou égale à 5%, de préférence supérieure ou égale à 10%, de préférence supérieure ou égale à 15%, avantageusement supérieure ou égale à 20%, par exemple supérieure ou égale à 25%, préférentiellement supérieure ou égale à 30%.

De préférence, la teneur pondérale en trifluoroéthylène (R1123) dans la composition est choisie parmi l'une des teneurs suivantes : 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, en poids par rapport au poids total de la composition.

La teneur pondérale en pentafluoroéthane (HFC-125) dans la composition peut être comprise par exemple entre 10% et 40%, 10% et 35%, 10% et 30%, 10% et 25%, 10% et 20%, 15% et 40%, 15% et 35%, 15% et 30%, 15% et 25%, 15% et 20%, 20% et 40%, 20% et 35%, 20% et 30%, 20% et 25%, 25% et 40%, 25% et 35%, 25% et 30%, 30% et 40%, 30% et 35%, 35% et 40%.

Selon un mode de réalisation, la teneur pondérale en pentafluoroéthane (HFC-125) dans la composition est supérieure ou égale à 10%, de préférence supérieure ou égale à 15%, de préférence supérieure ou égale à 20%, avantageusement supérieure ou égale à 25%, par exemple supérieure ou égale à 30%, préférentiellement supérieure ou égale à 35%.

De préférence, la teneur pondérale en pentafluoroéthane (HFC-125) dans la composition est choisie parmi l'une des teneurs suivantes : 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40% en poids par rapport au poids total de la composition.

La teneur pondérale en 1,1,1,2-tétrafluoroéthane (HFC-134a) dans la composition peut être comprise par exemple entre 5% et 40%, 5% et 35%, 5% et 30%, 5% et 25%, 5% et 20%, 5% et 15%, 5% et 10%, 10% et 40%, 10% et 35%, 10% et 30%, 10% et 25%, 10% et 20%, 10% et 15%, 15% et 40%, 15% et 35%, 15% et 30%, 15% et 25%, 15% et 20%, 20% et 40%, 20% et 35%, 20% et 30%, 20% et 25%, 25% et 40%, 25% et 35%, 25% et 30%, 30% et 40%, 30% et 35%, 35% et 40%.

Selon un mode de réalisation, la teneur pondérale en 1,1,1,2-tétrafluoroéthane (HFC-134a) dans la composition est supérieure ou égale à 5%, de préférence supérieure ou égale à 10%, de préférence supérieure ou égale à 15%, avantageusement supérieure ou égale à 20%, par exemple supérieure ou égale à 25%, préférentiellement supérieure ou égale à 30%.

De préférence, la teneur pondérale en 1,1,1,2-tétrafluoroéthane (HFC-134a) dans la composition est choisie parmi l'une des teneurs suivantes : 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39% en poids par rapport au poids total de la composition.

Les compositions susmentionnées ont un GWP inférieur à 500.

Les compositions susmentionnées sont avantageusement peu ou non inflammables.

Les compositions présentent avantageusement un bon compromis entre bonnes performances énergétiques, inflammabilité faible ou nulle, et faible GWP, de préférence un GWP inférieur à .

### R1123/HFC-125/HFO-1234yf

Selon un mode de réalisation préféré, le composé C tel que défini ci-dessus est le 2,3,3,3-tétrafluoropropène (HFO-1234yf).

La composition selon l'invention peut comprendre (de préférence peut consister essentiellement en, préférentiellement peut consister en) :
- trifluoroéthylène (R1123) ;
- pentafluoroéthane (HFC-125) ; et
- 2,3,3,3-tétrafluoropropène (HFO-1234yf).

La teneur pondérale en trifluoroéthylène (R1123) dans la composition peut être comprise par exemple entre 10% et 40%, 10% et 35%, 10% et 30%, 10% et 25%, 10% et 20%, 10% et 15%, 15% et 40%, 15% et 35%, 15% et 30%, 15% et 25%, 15% et 20%, 20% et 40%, 20% et 35%, 20% et 30%, 20% et 25%, 25% et 40%, 25% et 35%, 25% et 30%, 30% et 40%, 30% et 35%, 35% et 40%. De préférence, la teneur pondérale en trifluoroéthylène (R1123) dans la composition est comprise entre 10% et 40% ou entre 15% et 35%.

Selon un mode de réalisation, la teneur pondérale en trifluoroéthylène (R1123) dans la composition est supérieure ou égale à 5%, de préférence supérieure ou égale à 10%, de préférence supérieure ou égale à 15%, avantageusement supérieure ou égale à 20%, par exemple supérieure ou égale à 25%, préférentiellement supérieure ou égale à 30%.

De préférence, la teneur pondérale en trifluoroéthylène (R1123) dans la composition est choisie parmi l'une des teneurs suivantes : 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40% en poids par rapport au poids total de la composition.

La teneur pondérale en pentafluoroéthane (HFC-125) dans la composition peut être comprise par exemple entre 1% et 20%, 1% et 15%, 1% et 10%, 1% et 5%, 2% et 20%, 2% et 15%, 2% et 10%, 2% et 5%, 3% et 20%, 3% et 15%, 3% et 10%, 3% et 5%, 4% et 20%, 4% et 15%, 4% et 10%, 4% et 5%, 5% et 20%, 5% et 15%, ou entre 5% et 10%.

De préférence, la teneur pondérale en pentafluoroéthane (HFC-125) dans la composition est comprise entre 1% et 15%, préférentiellement entre 1% et 10%, avantageusement entre 1% et 5%, en particulier entre 1% et 4%.

Selon un mode de réalisation, la teneur pondérale en pentafluoroéthane (HFC-125) dans la composition est supérieure ou égale à 1%, de préférence inférieure ou égale à 10%, de préférence inférieure ou égale à 8%, avantageusement inférieure ou égale à 7%, par exemple inférieure ou égale à 5%.

De préférence, la teneur pondérale en pentafluoroéthane (HFC-125) dans la composition est choisie parmi l'une des teneurs suivantes : 1%, 2%, 3%, 4%, 5%, 6%, 7%, 8%, 9%, et 10% en poids par rapport au poids total de la composition.

La teneur pondérale en 2,3,3,3-tétrafluoropropène (HFO-1234yf) dans la composition peut être comprise par exemple entre 60% et 99%, 65% et 99%, 70% et 99%, 75% et 99%, 80% et 99%, 85% et 99%, 90% et 99%, 50% et 95%, 55% et 95%, 60% et 95%, 65% et 95%, 70% et 95%, 75% et 95%, 80% et 95%, 85% et 95%, 90% et 95%, 50% et 90%, 55% et 90%, 60% et 90%, 65% et 90%, 70% et 90%, 75% et 90%, 80% et 90%, 85% et 90%, 50% et 85%, 55% et 85%, 60% et 85%, 65% et 85%, 70% et 85%, 75% et 85%, 80% et 85%, 50% et 80%, 55% et 80%, 60% et 80%, 65% et 80%, 70% et 80%, 75% et 80%, 50% et 75%, 55% et 75%, 60% et 75%, 65% et 75%, ou entre 70% et 75%. De préférence, la teneur pondérale en 2,3,3,3-tétrafluoropropène (HFO-1234yf) dans la composition est comprise entre 60% et 90%, par exemple entre 60% et 85%.

Selon un mode de réalisation, la teneur pondérale en 2,3,3,3-tétrafluoropropène (HFO-1234yf) dans la composition est supérieure ou égale à 60%, de préférence supérieure ou égale à 65%, avantageusement supérieure ou égale à 70%, par exemple supérieure ou égale à 75%, préférentiellement supérieure ou égale à 80%, notamment supérieure ou égale à 85%.

De préférence, la teneur pondérale en 2,3,3,3-tétrafluoropropène (HFO-1234yf) dans la composition est choisie parmi l'une des teneurs suivantes : 60%, 61%, 62%, 63%, 64%, 65%, 66%, 67%, 68%, 69%, 70%, 71%, 72%, 73%, 74%, 75%, 76%, 77%, 78%, 79%, 79%, 80%, 81%, 82%, 83%, 84%, 85%, 86%, 87%, 88%, 89%, 90%, 91%, 92%, 93%, 94%, 95%, 96%, 97%, 98%, ou 99% en poids par rapport au poids total de la composition.

De préférence, la composition susmentionnée comprend (de préférence consiste essentiellement en, préférentiellement consiste en) :
- de 15% à 35% en poids de trifluoroéthylène (R1123) ;
- de 1% à 5% en poids de pentafluoroéthane (HFC-125) ; et
- de 60% à 84% en poids de 2,3,3,3-tétrafluoropropène (HFO-1234yf).

Des compositions susmentionnées préférées ont un GWP inférieur à 200, de préférence inférieur ou égal à 150.

Les compositions susmentionnées sont avantageusement peu ou non inflammables.

Les compositions ont avantageusement une limite inférieure d'inflammabilité supérieure à 200 g/m³.

Les compositions susmentionnées conduisent avantageusement à une composition WCFF ayant une limite inférieure d'inflammabilité supérieure à 230 g/m³, de préférence supérieure ou égale à 250 g/ m^{3,} en particulier supérieure ou égale à 280 g/m³.

Des compositions préférées, ainsi que les WCF et WCFF correspondantes, ont une chaleur de combustion (HOC) inférieure à 19 000 kJ/m³. La chaleur de combustion selon l'invention est définie et déterminée tel qu'indiqué dans la norme ASHRAE 34-2013.

Les compositions ont avantageusement une vitesse de propagation de flamme inférieure à 10 cm/s, de préférence inférieure ou égale à 8 cm/s, préférentiellement inférieure ou égale à 6 cm/s, avantageusement inférieure ou égale à 5 cm/s, très avantageusement inférieure ou égale à 4 cm/s, inférieure ou égale à 3, inférieure ou égale à 2, inférieure ou égale à 1.5..

Des compositions préférées sont avantageusement classée 2L selon la norme ASHRAE 34-2013. Suivant cette norme, la classification 2L nécessite une vitesse de propagation de flamme inférieure à 10 cm/s.

Les compositions présentent avantageusement un bon compromis entre bonnes performances énergétiques, inflammabilité faible ou nulle, et faible GWP, de préférence un GWP inférieur à 200.

### R1123/HFC-125/HFC-134a/HFO-1234yf

Selon un mode de réalisation préféré, la composition selon l'invention comprend deux composés: le 1,1,1,2-tétrafluoroéthane (HFC-134a) et le 2,3,3,3-tétrafluoropropène (HFO-1234yf).

La composition selon l'invention peut comprendre (de préférence peut consister essentiellement en, préférentiellement peut consister en) :
- trifluoroéthylène (R1123) ;
- pentafluoroéthane (HFC-125) ;
- 1,1,1,2-tétrafluoroéthane (HFC-134a) ; et
- 2,3,3,3-tétrafluoropropène (HFO-1234yf).

La teneur pondérale en trifluoroéthylène (R1123) dans la composition peut être comprise par exemple entre 5% et 40%, 5% et 35%, 5% et 30%, 5% et 25%, 5% et 20%, 5% et 15%, 5% et 10%, 10% et 40%, 10% et 35%, 10% et 30%, 10% et 25%, 10% et 20%, 10% et 15%, 15% et 40%, 15% et 35%, 15% et 30%, 15% et 25%, 15% et 20%, 20% et 40%, 20% et 35%, 20% et 30%, 20% et 25%, 25% et 40%, 25% et 35%, 25% et 30%, 30% et 40%, 30% et 35%, 35% et 40%.

Selon un mode de réalisation, la teneur pondérale en trifluoroéthylène (R1123) dans la composition est supérieure ou égale à 5%, de préférence supérieure ou égale à 10%, de préférence supérieure ou égale à 15%, avantageusement supérieure ou égale à 20%, par exemple supérieure ou égale à 25%, préférentiellement supérieure ou égale à 30%.

De préférence, la teneur pondérale en trifluoroéthylène (R1123) dans la composition est choisie parmi l'une des teneurs suivantes : 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, en poids par rapport au poids total de la composition.

La teneur pondérale en pentafluoroéthane (HFC-125) dans la composition peut être comprise par exemple entre 5% et 40%, 5% et 35%, 5% et 30%, 5% et 25%, 5% et 20%, 10% et 40%, 10% et 35%, 10% et 30%, 10% et 25%, 10% et 20%, 15% et 40%, 15% et 35%, 15% et 30%, 15% et 25%, 15% et 20%, 20% et 40%, 20% et 35%, 20% et 30%, 20% et 25%, 25% et 40%, 25% et 35%, 25% et 30%, 30% et 40%, 30% et 35%, 35% et 40%.

Selon un mode de réalisation, la teneur pondérale en pentafluoroéthane (HFC-125) dans la composition est supérieure ou égale à 5%, de préférence supérieure ou égale à 10%, de préférence supérieure ou égale à 15%, avantageusement supérieure ou égale à 20%, par exemple supérieure ou égale à 25%, préférentiellement supérieure ou égale à 30%.

De préférence, la teneur pondérale en pentafluoroéthane (HFC-125) dans la composition est choisie parmi l'une des teneurs suivantes : 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40% en poids par rapport au poids total de la composition.

La teneur pondérale en 1,1,1,2-tétrafluoroéthane (HFC-134a) dans la composition peut être comprise par exemple entre 1% et 50%, 1% et 45%, 1% et 40%, 1% et 35%, 1% et 30%, 1% et 25%, 1% et 20%, 1% et 15%, 1% et 10%, 1% et 5%, 2% et 50%, 2% et 45%, 2% et 40%, 2% et 35%, 2% et 30%, 2% et 25%, 2% et 20%, 2% et 15%, 2% et 10%, 2% et 5%, 3% et 50%, 3% et 45%, 3% et 40%, 3% et 35%, 3% et 30%, 3% et 25%, 3% et 20%, 3% et 15%, 3% et 10%, 3% et 5%, 4% et 50%, 4% et 45%, 4% et 40%, 4% et 35%, 4% et 30%, 4% et 25%, 4% et 20%, 4% et 15%, 4% et 10%, 4% et 5%, 5% et 50%, 5% et 45%, 5% et 40%, 5% et 35%, 5% et 30%, 5% et 25%, 5% et 20%, 5% et 15%, 5% et 10%, 10% et 50%, 10% et 45%, 10% et 40%, 10% et 35%, 10% et 30%, 10% et 25%, 10% et 20%, 10% et 15%, 15% et 50%, 15% et 45%, 15% et 40%, 15% et 35%, 15% et 30%, 15% et 25%, 15% et 20%, 20% et 50%, 20% et 45%, 20% et 40%, 20% et 35%, 20% et 30%, 20% et 25%, 25% et 50%, 25% et 45%, 25% et 40%, 25% et 35%, 25% et 30%, 30% et 50%, 30% et 45%, 30% et 40%, 30% et 35%, 40% et 50%, ou entre 40% et 45%. De préférence, la teneur pondérale en 1,1,1,2-tétrafluoroéthane (HFC-134a) dans la composition est comprise entre 5% et 50%, préférentiellement entre 5% et 45%, avantageusement entre 5% et 40%.

Selon un mode de réalisation, la teneur pondérale en 1,1,1,2-tétrafluoroéthane (HFC-134a) dans la composition est supérieure ou égale à 5%, de préférence supérieure ou égale à 10%, de préférence supérieure ou égale à 15%, avantageusement supérieure ou égale à 20%, par exemple supérieure ou égale à 25%, préférentiellement supérieure ou égale à 30%, notamment supérieure ou égale à 40%.

De préférence, la teneur pondérale en 1,1,1,2-tétrafluoroéthane (HFC-134a) dans la composition est choisie parmi l'une des teneurs suivantes : 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, ou 50% en poids par rapport au poids total de la composition.

La teneur pondérale en 2,3,3,3-tétrafluoropropène (HFO-1234yf) dans la composition peut être comprise par exemple entre 1% et 60%, 1% et 50%, 1% et 45%, 1% et 40%, 1% et 35%, 1% et 30%, 1% et 25%, 1% et 20%, 1% et 15%, 1% et 10%, 1% et 5%, 2% et 50%, 2% et 45%, 2% et 40%, 2% et 35%, 2% et 30%, 2% et 25%, 2% et 20%, 2% et 15%, 2% et 10%, 2% et 5%, 3% et 50%, 3% et 45%, 3% et 40%, 3% et 35%, 3% et 30%, 3% et 25%, 3% et 20%, 3% et 15%, 3% et 10%, 3% et 5%, 4% et 50%, 4% et 45%, 4% et 40%, 4% et 35%, 4% et 30%, 4% et 25%, 4% et 20%, 4% et 15%, 4% et 10%, 4% et 5%, 5% et 50%, 5% et 45%, 5% et 40%, 5% et 35%, 5% et 30%, 5% et 25%, 5% et 20%, 5% et 15%, 5% et 10%, 10% et 50%, 10% et 45%, 10% et 40%, 10% et 35%, 10% et 30%, 10% et 25%, 10% et 20%, 10% et 15%, 15% et 50%, 15% et 45%, 15% et 40%, 15% et 35%, 15% et 30%, 15% et 25%, 15% et 20%, 20% et 50%, 20% et 45%, 20% et 40%, 20% et 35%, 20% et 30%, 20% et 25%, 25% et 50%, 25% et 45%, 25% et 40%, 25% et 35%, 25% et 30%, 30% et 50%, 30% et 45%, 30% et 40%, 30% et 35%, 40% et 50%, ou entre 40% et 45%. De préférence, la teneur pondérale en 2,3,3,3-tétrafluoropropène (HFO-1234yf) dans la composition est comprise entre 5% et 50%, préférentiellement entre 5% et 45%, avantageusement entre 5% et 40%.

Selon un mode de réalisation, la teneur pondérale en 2,3,3,3-tétrafluoropropène (HFO-1234yf) dans la composition est supérieure ou égale à 5%, de préférence supérieure ou égale à 10%, de préférence supérieure ou égale à 15%, avantageusement supérieure ou égale à 20%, par exemple supérieure ou égale à 25%, préférentiellement supérieure ou égale à 30%, notamment supérieure ou égale à 40%.

De préférence, la teneur pondérale en 2,3,3,3-tétrafluoropropène (HFO-1234yf) dans la composition est choisie parmi l'une des teneurs suivantes : 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, ou 60% en poids par rapport au poids total de la composition.

Selon un mode de réalisation, la composition susmentionnée comprend (de préférence consiste essentiellement en, préférentiellement consiste en) :
- de 5% à 60% en poids de trifluoroéthylène (R1123) ;
- de 5% à 60% en poids de pentafluoroéthane (HFC-125) ;
- de 1% à 50% en poids de 1,1,1,2-tétrafluoroéthane (HFC-134a) ; et
- de 1% à 60% en poids de 2,3,3,3-tétrafluoropropène (HFO-1234yf) ; la teneur pondérale en composé(s) C étant supérieure ou égale à 60%.

Selon un mode de réalisation, la composition susmentionnée comprend (de préférence consiste essentiellement en, préférentiellement consiste en) :
- de 5% à 60% en poids de trifluoroéthylène (R1123) ;
- de 5% à 60% en poids de pentafluoroéthane (HFC-125) ;
- de 5% à 50% en poids de 1,1,1,2-tétrafluoroéthane (HFC-134a) ; et
- de 5% à 50% en poids de 2,3,3,3-tétrafluoropropène (HFO-1234yf) ; la teneur pondérale en composé(s) C étant supérieure ou égale à 60%.

Selon un mode de réalisation, la composition susmentionnée comprend (de préférence consiste essentiellement en, préférentiellement consiste en) :
- de 5% à 55% en poids de trifluoroéthylène (R1123) ;
- de 10% à 55% en poids de pentafluoroéthane (HFC-125) ;
- de 5% à 40% en poids de 1,1,1,2-tétrafluoroéthane (HFC-134a) ; et
- de 5% à 40% en poids de 2,3,3,3-tétrafluoropropène (HFO-1234yf) ; la teneur pondérale en composé(s) C étant supérieure ou égale à 60%.

Selon un mode de réalisation, la composition susmentionnée comprend (de préférence consiste essentiellement en, préférentiellement consiste en) :
- de 5% à 25% en poids de trifluoroéthylène (R1123) ;
- de 10% à 55% en poids de pentafluoroéthane (HFC-125) ;
- de 10% à 40% en poids de 1,1,1,2-tétrafluoroéthane (HFC-134a) ; et
- de 10% à 40% en poids de 2,3,3,3-tétrafluoropropène (HFO-1234yf) ; la teneur pondérale en composé(s) C étant supérieure ou égale à 60%.

Selon un mode de réalisation, les compositions susmentionnées ont un GWP inférieur à 500.

Les compositions susmentionnées sont avantageusement peu ou non inflammables.

Les compositions présentent avantageusement un bon compromis entre bonnes performances énergétiques, inflammabilité faible ou nulle, et faible GWP, de préférence un GWP inférieur à 500.

### Composition de transfert de chaleur

Selon un mode de réalisation, la composition telle que définie ci-dessus est un fluide de transfert de chaleur.

La présente invention concerne également une composition de transfert de chaleur comprenant (de préférence constituée de) la composition selon l'invention telle que définie ci-dessus, et au moins un additif notamment choisi parmi les nanoparticules, les stabilisants, les tensioactifs, les agents traceurs, les agents fluorescents, les agents odorants, les lubrifiants et les agents de solubilisation. De préférence l'additif est choisi parmi les lubrifiants, et notamment les lubrifiants à base d'esters de polyol.

Par « *composé de transfert de chaleur »,* respectivement « *fluide de transfert de chaleur »* ou « fluide frigorigène », on entend un composé, respectivement un fluide, susceptible d'absorber de la chaleur en s'évaporant à basse température et basse pression et de rejeter de la chaleur en se condensant à haute température et haute pression, dans un circuit de compression de vapeur. De manière générale, un fluide de transfert de chaleur peut comprendre un seul, deux, trois ou plus de trois composés de transfert de chaleur.

Par *« composition de transfert de chaleur »,* on entend une composition comprenant un fluide de transfert de chaleur et éventuellement un ou plusieurs additifs qui ne sont pas des composés de transfert de chaleur pour l'application envisagée.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butyl glycidyl éther, hexanediol diglycidyl éther, allyl glycidyl éther, butylphénylglycidyl éther, les phosphites, les phosphonates, les thiols et les lactones.

A titre de nanoparticules on peut notamment utiliser les nanoparticules de charbon, les oxydes métalliques (cuivre, aluminium), TiOz, Al₂O₃, MoS₂...

A titre d'agents traceurs (susceptibles d'être détectés), on peut citer les hydrofluorocarbures deutérés ou non, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les amines, les norbornènes, les dérivés de norbornènes, le cyclohexène, les composés aromatiques hétérocycliques, l'ascaridole, l'o-méthoxy(méthyl)-phénol et les combinaisons de ceux-ci.

Dans le cadre de l'invention, on utilise manière équivalente les termes « lubrifiant », « huile lubrifiante » et « huile de lubrification ».

A titre de lubrifiants on peut notamment utiliser des huiles d'origine minérale, des huiles de silicone, des paraffines d'origine naturelle, des naphtènes, des paraffines synthétiques, des alkylbenzènes, des poly-alpha oléfines, des polyalkène glycols, des polyol esters (ester de polyols) et / ou des polyvinyléthers.

Selon un mode de réalisation, le lubrifiant est à base d'esters de polyol. En particulier, le lubrifiant comprend un ou plusieurs ester(s) de polyol.

Selon un mode de réalisation, les esters de polyol sont obtenus par réaction d'au moins un polyol, avec un acide carboxylique ou avec un mélange d'acides carboxyliques.

Dans le cadre de l'invention, le terme « acide carboxylique » couvre à la fois un acide monocarboxylique et polycarboxylique, tel que par exemple dicarboxylique.

Dans le cadre de l'invention, et sauf mention contraire, on entend par « polyol », un composé contenant au moins deux groupements hydroxyles (-OH).

### Esters de polyol A)

Selon un mode de réalisation, les esters de polyol selon l'invention répondent la formule suivante (I) suivante :

R¹[OC(O)R²]ₙ (I)

dans laquelle :
- R¹ est un radical hydrocarboné, linéaire ou ramifié, éventuellement substitué par au moins un groupement hydroxyle et/ou comprenant au moins un hétéroatome choisi dans le groupe constitué de -O-, -N-, et -S- ;
- chaque R² est, indépendamment les uns des autres, choisi dans le groupe constitué de :
   ∘ i) H ;
   ∘ ii) un radical hydrocarboné aliphatique ;
   ∘ iii) un radical hydrocarboné ramifié ;
   ∘ iv) un mélange d'un radical ii) et/ou iii), avec un radical hydrocarboné aliphatique comprenant de 8 à 14 atomes de carbone ; et
- n est un entier d'au moins 2.

Dans le cadre de l'invention, on entend par radical hydrocarboné, un radical composé d'atomes de carbone et d'hydrogène.

Selon un mode de réalisation, les polyols ont la formule générale (II) suivante :

R¹(OH)ₙ (II)

dans laquelle :
- R¹ est un radical hydrocarboné, linéaire ou ramifié, éventuellement substitué par au moins un groupement hydroxyle, de préférence par deux groupements hydroxyle, et/ou comprenant au moins un hétéroatome choisi dans le groupe constitué de -O-, -N-, et -S- ; et
- n est un entier d'au moins 2.

De préférence, R¹ est un radical hydrocarboné, linéaire ou ramifié, comprenant de 4 à 40 atomes de carbone, de préférence de 4 à 20 atomes de carbone.

De préférence, R¹ est un radical hydrocarboné, linéaire ou ramifié, comprenant au moins un atome d'oxygène.

De préférence, R¹ est un radical hydrocarboné ramifié comprenant de 4 à 10 atomes de carbone, de préférence 5 atomes de carbone, substitué par deux groupements hydroxyle.

Selon un mode de réalisation préféré, les polyols comprennent de 2 à 10 groupements hydroxyle, de préférence de 2 à 6 groupements hydroxyle.

Les polyols selon l'invention peuvent comprendre un ou plusieurs groupes oxyalkylène, il s'agit dans ce cas particulier de polyétherpolyols.

Les polyols selon l'invention peuvent également comprendre un ou plusieurs atomes d'azote. Par exemple, les polyols peuvent être des alcanol amine contenant de 3 à 6 groupements OH. De préférence, les polyols sont des alcanol amine contenant au moins deux groupements OH, et de préférence au moins trois.

Selon la présente invention, les polyols préférés sont choisis dans le groupe constitué de l'éthylène glycol, du diéthylène glycol, du triéthylène glycol, du propylène glycol, du dipropylène glycol, du glycérol, du néopentyle glycol, du 1,2-butanediol, du 1,4-butanediol, du 1,3-butanediol, du pentaérythritol, du dipentaérythritol, du tripentaérythritol, du triglycérol, du triméthylolpropane, du sorbitol, de l'hexaglycérol, et de leurs mélanges. De préférence, le polyol est le pentaérythritol ou le dipentaérythritol.

Selon l'invention, les acides carboxyliques peuvent répondre à la formule générale (III) suivante :

R²COOH (III)

dans laquelle :
- R² est choisi dans le groupe constitué de :
   ∘ i) H ;
   ∘ ii) un radical hydrocarboné aliphatique ;
   ∘ iii) un radical hydrocarboné ramifié ;
   ∘ iv) un mélange d'un radical ii) et/ou iii), avec un radical hydrocarboné aliphatique comprenant de 8 à 14 atomes de carbone.

De préférence, R² est un radical hydrocarboné aliphatique comprenant de 1 à 10, préférentiellement de 1 à 7 atomes de carbone, et en particulier de 1 à 6 atomes de carbone.

De préférence, R² est un radical hydrocarboné ramifié comprenant de 4 à 20 atomes de carbone, en particulier de 5 à 14 atomes de carbone, et préférentiellement de 6 à 8 atomes de carbone.

Selon un mode de réalisation préféré, un radical hydrocarboné ramifié a la formule (IV) suivante :

-C(R³)R⁴)(R⁵) (IV)

dans laquelle R³, R⁴ et R⁵ sont, indépendamment les uns des autres, un groupe alkyle, et au moins un des groupes alkyle contient au minimum deux atomes de carbone. De tels groupes alkyles ramifiés, une fois liés au groupe carboxyle sont connus sous la dénomination « groupe néo», et l'acide correspondant en tant que « acide néo ». De préférence, R³ et R⁴ sont des groupes méthyles et R¹⁰ est un groupe alkyle comprenant au moins deux atomes de carbone.

Selon l'invention, le radical R² peut comprenant un ou plusieurs groupes carboxy, ou groupes ester tels que -COOR⁶, avec R⁶ représentant un radical alkyle, hydroxyalkyle ou un groupe hydroxyalkyloxy alkyle.

De préférence, l'acide R²COOH de formule (III) est un acide monocarboxylique.

Des exemples d'acides carboxyliques dans lesquels le radical hydrocarboné est aliphatique sont notamment: l'acide formique, l'acide acétique, l'acide propionique, l'acide butyrique, l'acide pentanoïque, l'acide hexanoïque et l'acide heptanoïque.

Des exemples d'acides carboxyliques dans lesquels le radical hydrocarboné est ramifié sont notamment : l'acide 2-éthyl-n-butyrique, l'acide 2-hexyldécanoïque, l'acide isostéarique, l'acide 2-méthyl-hexanoïque, l'acide 2-méthylbutanoïque, l'acide 3-méthylbutanoïque, le 3,5,5-triméthyl-hexanoïque, l'acide 2-éthylhexanoïque, l'acide néoheptanoïque, et l'acide néodécanoïque.

Le troisième type d'acides carboxyliques pouvant être utilisés dans la préparation des esters de polyols de formule (I) sont les acides carboxyliques comprenant un radical hydrocarboné aliphatique comprenant de 8 à 14 atomes de carbone. On peut par exemple citer : l'acide décanoïque, l'acide dodécanoïque, l'acide laurique, l'acide stéarique, l'acide myristique, l'acide béhénique,.. Parmi les acides dicarboxyliques, on peut citer l'acide maléïque, l'acide succinique, l'acide adipique, l'acide sébacique...

Selon un mode de réalisation préféré, les acides carboxyliques utilisés pour préparer les esters de polyols de formule (I) comprennent un mélange d'acides monocarboxyliques et dicarboxyliques, la proportion d'acides monocarboxyliques étant majoritaire. La présence d'acides dicarboxyliques résultent notamment dans la formation d'esters de polyol de viscosité élevée.

En particulier, la réaction de formation des esters de polyols de formule (I) par réaction entre l'acide carboxylique et les polyols est une réaction catalysée par un acide. Il s'agit notamment d'une réaction réversible, qui peut être complète par l'utilisation d'une large quantité d'acide ou par l'élimination de l'eau formée au cours de la réaction.

La réaction d'estérification peut être réalisée en présence d'acides organiques ou inorganiques, tels que l'acide sulfurique, l'acide phosphorique...

De préférence, la réaction est réalisée en l'absence de catalyseur.

La quantité d'acide carboxylique et de polyol peut varier dans le mélange selon les résultats désirés. Dans le cas particulier où tous les groupements hydroxyles sont estérifiés, une quantité suffisante d'acide carboxylique doit être ajoutée pour réagir avec tous les hydroxyles.

Selon un mode de réalisation, lors de l'utilisation de mélanges d'acides carboxyliques, ceux-ci peuvent réagir de manière séquentielle avec les polyols.

Selon un mode de réalisation préféré, lors de l'utilisation de mélange d'acides carboxyliques, un polyol réagit d'abord avec un acide carboxylique, typiquement l'acide carboxylique de poids moléculaire le plus élevé, suivie de la réaction avec l'acide carboxylique ayant une chaîne hydrocarbonée aliphatique.

Selon un mode de réalisation, les esters peuvent être formés par réaction entre les acides carboxyliques (ou leurs dérivés anhydrides ou esters) avec les polyols, en présence d'acides à température élevée, tout en enlevant l'eau formée au cours de la réaction. Typiquement, la réaction peut être réalisée à une température comprise de 75 à 200°C.

Selon un autre mode de réalisation, les esters de polyols formés peuvent comprendre des groupements hydroxyle n'ayant pas tous réagit, il s'agit dans ce cas d'esters de polyols partiellement estérifiés.

Selon un mode de réalisation préféré, les esters de polyol sont obtenus à partir de l'alcool pentaérythritol, et d'un mélange d'acides carboxyliques : l'acide isononanoïque, au moins un acide ayant un radical hydrocarboné aliphatique comprenant de 8 à 10 atomes de carbone, et l'acide heptanoïque. Les esters de polyol préférés sont obtenus à partir du pentaérythritol, et d'un mélange de 70% d'acide isononanoïque, de 15% d'au moins un acide carboxylique ayant un radical hydrocarboné aliphatique comprenant de 8 à 10 atomes de carbone, et 15% d'acide heptanoïque. On peut par exemple citer l'huile Solest 68 commercialisée par CPI Engineering Services Inc.

Selon un mode de réalisation préféré, les esters de polyol sont obtenus à partir de l'alcool dipentaérythritol, et d'un mélange d'acides carboxyliques : l'acide isononanoïque, au moins un acide ayant un radical hydrocarboné aliphatique comprenant de 8 à 10 atomes de carbone, et l'acide heptanoïque

De préférence, les esters de polyols de l'invention présentent l'une des formules suivantes (I-A) ou (I-B) suivantes : 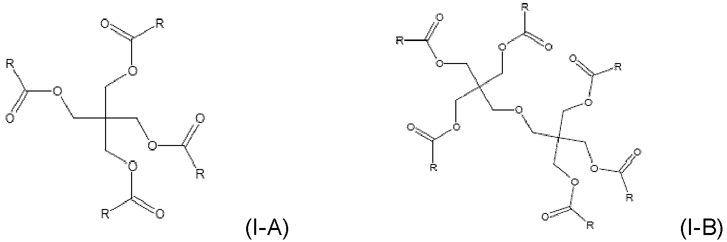 dans lesquelles chaque R représente, indépendamment les uns des autres :
- un radical hydrocarboné aliphatique comprenant de 1 à 10, de préférence, de 2 à 9, préférentiellement de 4 à 9 atomes de carbone, et en particulier de 1 à 6 atomes de carbone.
- un radical hydrocarboné ramifié comprenant de 4 à 20 atomes de carbone, en particulier de 4 à 14 atomes de carbone, et préférentiellement de 4 à 9 atomes de carbone.

En particulier, les esters de polyols de formule (I-A) ou de formule (I-B) comprennent des radicaux R différents.

Un ester de polyol préféré est un ester de formule (I-A) dans laquelle R est choisi parmi :
- un radical hydrocarboné aliphatique comprenant 4 atomes de carbone ; et/ou
- un radical hydrocarboné aliphatique comprenant 6 atomes de carbone ; et/ou
- un radical hydrocarboné aliphatique comprenant 7 atomes de carbone ; et/ou
- un radical hydrocarboné aliphatique comprenant 8 atomes de carbone ; et/ou
- un radical hydrocarboné aliphatique comprenant 9 atomes de carbone ; et/ou
- un radical hydrocarboné ramifié comprenant 4 atomes de carbone ; et/ou
- un radical hydrocarboné ramifié comprenant 5 atomes de carbone ; et/ou
- un radical hydrocarboné ramifié comprenant 7 atomes de carbone ; et/ou
- un radical hydrocarboné ramifié comprenant 8 atomes de carbone ; et/ou
- un radical hydrocarboné ramifié comprenant 9 atomes de carbone.

Un ester de polyol préféré est un ester de formule (I-B) dans laquelle R est choisi parmi :
- un radical hydrocarboné aliphatique comprenant 4 atomes de carbone ; et/ou
- un radical hydrocarboné aliphatique comprenant 6 atomes de carbone ; et/ou
- un radical hydrocarboné aliphatique comprenant 7 atomes de carbone ; et/ou
- un radical hydrocarboné aliphatique comprenant 8 atomes de carbone ; et/ou
- un radical hydrocarboné aliphatique comprenant 9 atomes de carbone ; et/ou
- un radical hydrocarboné ramifié comprenant 4 atomes de carbone ; et/ou
- un radical hydrocarboné ramifié comprenant 5 atomes de carbone ; et/ou
- un radical hydrocarboné ramifié comprenant 7 atomes de carbone ; et/ou
- un radical hydrocarboné ramifié comprenant 8 atomes de carbone ; et/ou
- un radical hydrocarboné ramifié comprenant 9 atomes de carbone.

### Esters de polyol B)

Selon un autre mode de réalisation, les esters de polyols de l'invention comprennent au moins un ester d'un ou plusieurs acides carboxyliques ramifiés comprenant au plus 8 atomes de carbone. L'ester est notamment obtenu par réaction dudit acide carboxylique ramifié avec un ou plusieurs polyols.

De préférence, l'acide carboxylique ramifié comprend au moins 5 atomes de carbone. En particulier, l'acide carboxylique ramifié comprend de 5 à 8 atomes de carbone, et préférentiellement il contient 5 atomes de carbone.

De préférence, l'acide carboxylique ramifié susmentionné ne comprend pas 9 atomes de carbone. En particulier, ledit acide carboxylique n'est pas l'acide 3,5,5-triméthylhexanoïque.

Selon un mode de réalisation préféré, l'acide carboxylique ramifié est choisi parmi l'acide 2-méthylbutanoïque, l'acide 3-méthylbutanoïque, et leurs mélanges.

Selon un mode de réalisation préféré, le polyol est choisi dans le groupe constitué du néopentyle glycol, du glycérol, du triméthylol propane, du pentaérythritol, du dipentaérythritol, du tripentaerythritol, et de leurs mélanges.

Selon un mode de réalisation préféré, les esters de polyol sont obtenus à partir de :
i) un acide carboxylique choisi parmi l'acide 2-méthylbutanoïque, l'acide 3-méthylbutanoïque, et leurs mélanges ; et
ii) un polyol choisi dans le groupe constitué du néopentyle glycol, du glycérol, du triméthylol propane, du pentaérythritol, du dipentaérythritol, du tripentaerythritol, et de leurs mélanges.

De préférence, l'ester de polyol est celui obtenu à partir de l'acide 2-méthylbutanoïque et du pentaérythritol.

De préférence, l'ester de polyol est celui obtenu à partir de l'acide 2-méthylbutanoïque et du dipentaérythritol.

De préférence, l'ester de polyol est celui obtenu à partir de l'acide 3-méthylbutanoïque et du pentaérythritol.

De préférence, l'ester de polyol est celui obtenu à partir de l'acide 3-méthylbutanoïque et du dipentaérythritol.

De préférence, l'ester de polyol est celui obtenu à partir de l'acide 2-méthylbutanoïque et du néopentyle glycol.

### Esters de polyol C)

Selon un autre mode de réalisation, les esters de polyols selon l'invention sont des esters de poly(néopentylpolyol) obtenus par :
i) réaction d'un néopentylpolyol ayant la formule suivante (V): 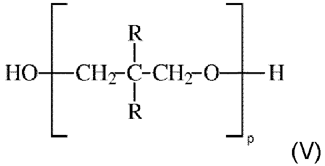 dans laquelle :
   - chaque R représente, indépendamment les uns des autres, CH₃, C₂H₅ ou CH₂OH ;
   - p est un entier allant de 1 à 4 ;
   avec au moins un acide monocarboxylique ayant de 2 à 15 atomes de carbone, et en présence d'un catalyseur acide, le ratio molaire entre les groupes carboxyles et les groupes hydroxyles étant inférieur à 1:1, pour former une composition de poly(néopentyl)polyol partiellement estérifiée; et
ii) réaction de la composition de poly(néopentyl)polyol partiellement estérifiée obtenue à l'issue de l'étape i), avec un autre acide carboxylique ayant de 2 à 15 atomes de carbone, pour former la composition finale d'ester(s) de poly(néopentylpolyol).

De préférence, la réaction i) est réalisée avec un ratio molaire allant de 1:4 à 1:2.

De préférence, le néopentylpolyol a la formule suivante (VI) : 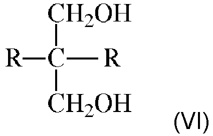 dans laquelle chaque R représente, indépendamment les uns des autres, CH₃, C₂H₅ ou CH₂OH.

Des néopentylpolyols préférés sont ceux choisis parmi le pentaérythritol, le dipentaérythritol, le tripentaérythritol, le tétraérythritol, le triméthylolpropane, le triméthyloléthane, et le néopentyle glycole. En particulier, le néopentylpolyol est le pentaérythritol.

De préférence, un unique néopentylpolyol est utilisé pour produire le lubrifiant à base de POE. Dans certains cas, deux ou plusieurs néopentylpolyols sont utilisés. C'est notamment le cas lorsque un produit commercial de pentaérythritol comprend des faibles quantités de dipentaérythritol, de tripentaérythritol, et de tétraérythritol.

Selon un mode de réalisation préféré, l'acide monocarboxylique susmentionné comprend de 5 à 11 atomes de carbone, de préférence de 6 à 10 atomes de carbone.

Les acides monocarboxyliques ont notamment la formule générale (VII) suivante :

R'C(O)OH (VII)

dans laquelle R' est un radical alkyle, linéaire ou ramifié, en C1-C12, un radical aryle en C6-C12, un radical aralkyl en C6-C30. De préférence, R' est un radical alkyle en C4-C10, et préférentiellement en C5-C9.

En particulier, l'acide monocarboxylique est choisi dans le groupe constitué de l'acide butanoïque, de l'acide pentanoïque, de l'acide hexanoïque, de l'acide heptanoïque, de l'acide n-octanoïque, de l'acide n-nonanoïque, de l'acide n-décanoïque, de l'acide 3-méthylbutanoïque, de l'acide 2-méthylbutanoïque, de l'acide 2,4-diméthylpentanoïque, de l'acide 2-éthylhexanoïque, de l'acide 3,3,5-triméthylhexanoïque, de l'acide benzoïque, et de leurs mélanges.

Selon un mode de réalisation préféré, l'acide monocarboxylique est l'acide n-heptanoïque, ou un mélange d'acide n-heptanoïque avec un autre acide monocarboxylique linéaire, en particulier l'acide n-octanoïque et/ou l'acide n-décanoïque. Un tel mélange d'acide monocarboxylique peut comprendre entre 15 et 100 mol% d'acide heptanoïque et entre 85 et 0 mol% d'autre(s) acide(s) monocarboxylique(s). En particulier, le mélange comprend entre 75 et 100 mol% d'acide heptanoïque, et entre 25 et 0 mol% d'un mélange d'acide octanoïque et d'acide décanoïque dans un ratio molaire 3 : 2.

Selon un mode de réalisation préféré, les esters de polyols comprennent :
i) de 45% à 55 % en poids d'un ester de monopentaérythritol avec au moins un acide monocarboxylique ayant de 2 à 15 atomes de carbone ;
ii) moins de 13% en poids d'un ester de dipentaérythritol avec au moins un acide monocarboxylique ayant de 2 à 15 atomes de carbone ;
iii) moins de 10% en poids d'un ester de tripentaérythritol avec au moins un acide monocarboxylique ayant de 2 à 15 atomes de carbone ; et
iv) au moins 25% en poids d'un ester de tétraérythritol et d'autres oligomères de pentaérythritol, avec au moins un acide monocarboxylique ayant de 2 à 15 atomes de carbone.

### Esters de polyol D)

Selon un autre mode de réalisation, les esters de polyol selon l'invention, ont la formule (VIII) suivante : 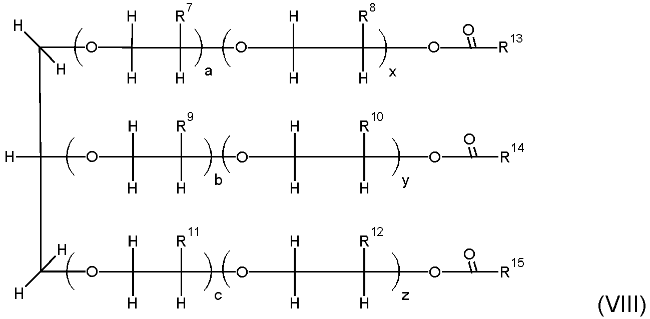 dans laquelle :
- R⁷, R⁸, R⁹, R¹⁰, R¹¹ et R¹² sont, indépendamment les uns des autres, H ou CH₃ ;
- a, b, c, y, x et z, sont, indépendamment les uns des autres, un entier ;
- a+x, b+y, et c+z sont, indépendamment les uns des autres, des entiers allant de 1 à 20 ;
- R¹³, R¹⁴ et R¹⁵ sont, indépendamment les uns des autres, choisis dans le groupe constitué des alkyles aliphatiques ou ramifiés, des alkényles, des cycloalkyles, des aryles, des alkylaryles, des arylalkyles, des alkylcycloalkyles, des cycloalkylalkyles, des arylcycloalkyles des cycloalkylaryles, des alkylcycloalkylaryles, des alkylarylcycloalkyles, des arylcycloalkylalkyles, des arylalkylcycloalkyles, des cycloalkylalkylaryl et des cycloalkylarylalkyles, R¹³, R¹⁴ et R¹⁵, ayant de 1 à 17 atomes de carbone, et pouvant être éventuellement substitués.

Selon un mode de réalisation préféré, chacun de R¹³, R¹⁴ et R¹⁵ représente, indépendamment les uns des autres, un groupe alkyle linéaire ou ramifié, un groupe alkényle, un groupe cycloalkyle, lesdits groupes alkyles, alkényles ou cycloalkyles pouvant comprendre au moins un hétéroatome choisi parmi N, O, Si, F ou S. De préférence, chacun de R¹³, R¹⁴ et R¹⁵ a, indépendamment les uns des autres, de 3 à 8 atomes de carbone, de préférence de 5 à 7 atomes de carbone.

De préférence, a+x, b+y, et c+z sont, indépendamment les uns des autres, des entiers allant de 1 à 10, préférentiellement de 2 à 8, et encore plus préférentiellement de 2 à 4.

De préférence, R⁷, R⁸, R⁹, R¹⁰, R¹¹ et R¹² représentent H.

Les esters de polyol de formule (VIII) ci-dessus peuvent typiquement être préparés tels que décrits aux paragraphes [0027] à [0030] de la demande internationale WO2012/177742.

En particulier, les esters de polyol de formule (VIII) sont obtenus par estérification d'alcoxylates de glycérol (tels que décrits au paragraphe [0027] de WO2012/177742) avec un ou plusieurs acides monocarboxyliques ayant de 2 à 18 atomes de carbone.

Selon un mode de réalisation préféré, les acides monocarboxyliques ont l'une des formules suivantes :

R¹³COOH

R¹⁴COOH

et

R¹⁵COOH

dans lesquelles R¹³, R¹⁴ et R¹⁵ sont tels que définis ci-dessus. Des dérivés des acides carboxyliques peuvent également être utilisés, tels que les anhydrides, les esters et les halogénures d'acyles.

L'estérification peut être réalisée avec un ou plusieurs acides monocarboxyliques. Des acides monocarboxyliques préférés sont ceux choisis dans le groupe constitué de l'acide acétique, l'acide propanoïque, l'acide butyrique, l'acide isobutanoïque, l'acide pivalique, l'acide pentanoïque, l'acide isopentanoique, l'acide hexanoïque, l'acide heptanoïque, l'acide octanoïque, l'acide 2-éthylhexanoïque, l'acide 3,3,5-triméthylhexanoïque, l'acide nonanoïque, l'acide décanoïque, l'acide néodécanoïque, l'acide undécanoïque, l'acide dodécanoïque, l'acide tridécanoïque, l'acide myristique, l'acide pentadécanoïque, l'acide palmitique, l'acide stéarique, l'acide oléïque, l'acide linoléïque, l'acide palmitoléïque, l'acide citronellique, l'acide undécénoïque, l'acide laurique, l'acide undécylénique, l'acide linolénique, l'acide arachidique, l'acide béhénique, l'acide tétrahydrobenzoïque, l'acide abiétique hydrogéné ou non, l'acide 2-éthylhexanoïque, l'acide furoïque, l'acide benzoïque, l'acide 4-acétylbenzoïque, l'acide pyruvique, l'acide 4-tert-butyl-benzoïque, l'acide naphthenique, l'acide 2-méthyl benzoïque, l'acide salicylique, leurs isomères, leurs esters méthyliques, et leurs mélanges.

De préférence, l'estérification est réalisée avec un ou plusieurs acides monocarboxyliques choisis dans le groupe constitué de l'acide pentanoïque, l'acide 2-méthylbutanoïque, l'acide n-hexanoïque, l'acide n-heptanoïque, le 3,3,5-triméthylhexanoïque, l'acide 2-éthylhexanoïque, l'acide n-octanoïque, l'acide n-nonanoïque et l'acide isononanoïque.

De préférence, l'estérification est réalisée avec un ou plusieurs acides monocarboxyliques choisis dans le groupe constitué de l'acide butyrique, l'acide isobutyrique, l'acide n-pentanoïque, l'acide 2-méthylbutanoïque, l'avide 3-méthylbutanoïque, l'avide n-hexanoïque, l'avide n-heptanoïque, l'acide n-octanoïque, l'acide 2-éthylhexanoïque, l'acide 3,3,5-triméthylhexanoïque, l'acide n-nonanoïque, l'acide décanoïque, l'acide undécanoïque, l'acide undécélénique, l'acide laurique, l'acide stéarique, l'acide isostéarique, et leurs mélanges.

Selon un autre mode de réalisation, les esters de polyol selon l'invention, ont la formule (IX) suivante : 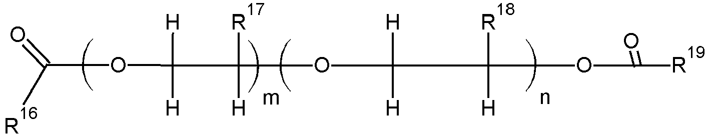 dans laquelle :
- chacun de R¹⁷ et R¹⁸, est, indépendamment l'un de l'autre, H ou CH₃ ;
- chacun de m et n, est, indépendamment l'un de l'autre, un entier, avec m+n, étant un entier allant de 1 à 10 ;
- R¹⁶ et R¹⁹ sont, indépendamment l'un de l'autre, choisis dans le groupe constitué des alkyles aliphatiques ou ramifiés, des alkényles, des cycloalkyles, des aryles, des alkylaryles, des arylalkyles, des alkylcycloalkyles, des cycloalkylalkyles, des arylcycloalkyles des cycloalkylaryles, des alkylcycloalkylaryles, des alkylarylcycloalkyles, des arylcycloalkylalkyles, des arylalkylcycloalkyles, des cycloalkylalkylaryl et des cycloalkylarylalkyles, R¹⁶ et R¹⁹, ayant de 1 à 17 atomes de carbone, et pouvant être éventuellement substitués.

Selon un mode de réalisation préféré, chacun de R¹⁶ et R¹⁹ représente, indépendamment l'un de l'autre, un groupe alkyle linéaire ou ramifié, un groupe alkényle, un groupe cycloalkyle, lesdits groupes alkyles, alkényles ou cycloalkyles pouvant comprendre au moins un hétéroatome choisi parmi N, O, Si, F ou S. De préférence, chacun de R¹⁶ et R¹⁹ a, indépendamment l'un de l'autre, de 3 à 8 atomes de carbone, de préférence de 5 à 7 atomes de carbone.

Selon un mode de réalisation préféré, chacun de R¹⁷ et R¹⁸ représente H, et/ou m+n est un entier allant de 2 à 8, de 4 à 10, de 2 à 5, ou de 3 à 5. En particulier, m+n vaut 2, 3 ou 4.

Selon un mode de réalisation préféré, les esters de polyol de formule (IX) ci-dessus sont des diesters de triéthylène glycol, des diesters de tétraéthylène glycol, en particulier avec un ou deux acides monocarboxyliques ayant de 4 à 9 atomes de carbone.

Les esters de polyol de formule (IX) ci-dessus peuvent être préparés par estérifications d'un éthylène glycol, d'un propylène glycol, ou d'un oligo- ou polyalkylène glycol, (qui peut être un oligo- ou polyéthylène glycol, oligo- ou polypropylène glycol, ou un copolymère à bloc éthylène glycol-propylène glycol), avec un ou deux acides monocarboxyliques ayant de 2 à 18 atomes de carbone. L'estérification peut être réalisée de manière identique à la réaction d'estérification mise en oeuvre pour préparer les esters de polyols de formule (VIII) ci-dessus.

En particulier, des acides monocarboxyliques identiques à ceux utilisés pour préparer les esters de polyol de formule (VIII) ci-dessus, peuvent être utilisés pour former les esters de polyol de formule (IX).

Selon un mode de réalisation, le lubrifiant à base d'esters de polyol selon l'invention, comprend de 20 à 80%, de préférence de 30 à 70%, et préférentiellement de 40 à 60% en poids d'au moins un ester de polyol de formule (VIII), et de 80 à 20%, de préférence de 70 à 30%, et préférentiellement de 60 à 40% en poids d'au moins un ester de polyol de formule (IX).

De manière générale, certaines fonctions alcools peuvent ne pas être estérifiées lors de la réaction d'estérification, cependant leur proportion reste faible. Ainsi, les POE peuvent comprendre entre 0 et5% molaire relatif de motifs CH₂OH par rapport aux motifs -CH₂-O-C(=O)-.

Les lubrifiants POE préférés selon l'invention sont ceux ayant une viscosité de 1 à 1000 centiStokes (cSt) à 40°C, de préférence de 10 à 200 cSt, encore plus préférentiellement de 20 à 100 cSt, et avantageusement de 30 à 80 cSt.

La classification internationale des huiles est notamment donnée par la norme ISO3448-1992 (NF T60-141) et d'après laquelle les huiles sont désignées par leur classe de viscosité moyenne mesurée à la température de 40°C.

### Utilisations

La composition selon la présente invention convient tout particulièrement comme fluide de transfert de chaleur en réfrigération, climatisation et pour le chauffage, et de préférence dans le transport frigorifique, la climatisation et le chauffage automobile.

La présente invention concerne l'utilisation de la composition selon l'invention pour réduire les risques d'inflammation et/ou d'explosion en cas de fuite de réfrigérant.

La faible inflammabilité de la composition permet avantageusement son utilisation dans de plus larges quantités dans les installations de transfert de chaleur. L'utilisation des fluides réfrigérants suivant les classes d'inflammabilité est notamment décrite dans la norme ISO 5149-1 (version 2014).

La présente invention concerne également l'utilisation d'une composition selon l'invention ou d'une composition de transfert de chaleur selon l'invention, dans un système de transfert de chaleur contenant un circuit de compression de vapeur.

Selon un mode de réalisation, le système de transfert de chaleur est :
- un système de climatisation ; ou
- un système de réfrigération ; ou
- un système de congélation ; ou
- un système de pompe à chaleur.

La présente invention concerne également un procédé de transfert de chaleur reposant sur l'utilisation d'une installation de transfert de chaleur contenant un circuit de compression de vapeur qui comprend la composition selon l'invention ou la composition de transfert de chaleur selon l'invention. Le procédé de transfert de chaleur peut être un procédé de chauffage ou de refroidissement d'un fluide ou d'un corps.

La composition selon l'invention ou la composition de transfert de chaleur peut aussi être utilisée dans un procédé de production de travail mécanique ou d'électricité, notamment conformément à un cycle de Rankine.

L'invention concerne également une installation de transfert de chaleur comprenant un circuit de compression de vapeur contenant la composition selon l'invention ou la composition de transfert de chaleur selon l'invention.

Selon un mode de réalisation, cette installation est choisie parmi les installations mobiles ou stationnaires de réfrigération, de chauffage (pompe à chaleur), de climatisation et de congélation, et les moteurs thermiques.

Il peut s'agir notamment d'une installation de pompe à chaleur, auquel cas le fluide ou corps que l'on chauffe (généralement de l'air et éventuellement un ou plusieurs produits, objets ou organismes) est situé dans un local ou un habitacle de véhicule (pour une installation mobile). Selon un mode de réalisation préféré, il s'agit d'une installation de climatisation, auquel cas le fluide ou corps que l'on refroidit (généralement de l'air et éventuellement un ou plusieurs produits, objets ou organismes) est situé dans un local ou un habitacle de véhicule (pour une installation mobile). Il peut s'agir d'une installation de réfrigération ou d'une installation de congélation (ou installation cryogénique), auquel cas le fluide ou corps que l'on refroidit comprend généralement de l'air et un ou plusieurs produits, objets ou organismes, situés dans un local ou un contenant.

Selon un mode de réalisation, l'installation de transfert de chaleur est une installation dont la puissance électrique est inférieure ou égale à 50kW, de préférence inférieure ou égale à 30kW, particulièrement inférieure ou égale à 22kW et plus particulièrement inférieure ou égale à 10kW et plus spécification inférieure ou égale à 2 kW. Comme application en froid commercial on peut par exemple citer les vitrines réfrigérés, les chambres froides, les machines à glace...) ; comme application en chauffage, on peut par exemple citer les pompes à chaleur, pompes à chaleur air-air, pompes à chaleur air-eau, chauffe-eau thermodynamique... ; comme application en climatisation résidentiel, on peut par exemple citer les installations mono split, installations multi-split, installations centralisées avec distribution d'air, installations à volume de réfrigérant variable... ; comme application en climatisation mobile, on peut par exemple citer les pompes à chaleur et climatisation de voiture.

L'invention a également pour objet un procédé de chauffage ou de refroidissement d'un fluide ou d'un corps au moyen d'un circuit de compression de vapeur contenant un fluide de transfert de chaleur ou une composition de transfert de chaleur, ledit procédé comprenant successivement l'évaporation du fluide ou de la composition de transfert de chaleur, la compression du fluide ou de la composition de transfert de chaleur, la condensation du fluide ou de la composition de transfert de chaleur, et la détente du fluide ou de la composition de transfert de chaleur, dans lequel le fluide de transfert de chaleur est la composition selon l'invention, ou la composition de transfert de chaleur est celle décrite ci-dessus.

L'invention a également pour objet un procédé de production d'électricité au moyen d'un moteur thermique, ledit procédé comprenant successivement l'évaporation du fluide de transfert de chaleur ou d'une composition de transfert de chaleur, la détente du fluide ou de la composition de transfert de chaleur dans une turbine permettant de générer de l'électricité, la condensation du fluide ou de la composition de transfert de chaleur et la compression du fluide ou de la composition de transfert de chaleur, dans lequel le fluide de transfert de chaleur est la composition selon l'invention et la composition de transfert de chaleur est celle décrite ci-dessus.

Le circuit de compression de vapeur, contenant un fluide ou une composition de transfert de chaleur selon l'invention, comprend au moins un évaporateur, un compresseur de préférence à un compresseur volumétrique à piston, un condenseur et un détendeur, ainsi que des lignes de transport du fluide ou de la composition de transfert de chaleur entre ces éléments. L'évaporateur et le condenseur comprennent un échangeur de chaleur permettant un échange de chaleur entre le fluide ou la composition de transfert de chaleur et un autre fluide ou corps. De préférence, l'échangeur de chaleur est un échangeur air/réfrigérant.

L'évaporateur utilisé dans le cadre de l'invention peut être un évaporateur à surchauffe ou un évaporateur noyé. Dans un évaporateur à surchauffe, la totalité du fluide ou de la composition de transfert de chaleur susmentionnées est évaporée à la sortie de l'évaporateur, et la phase vapeur est surchauffée.

Dans un évaporateur noyé, le fluide/la composition de transfert de chaleur sous forme liquide ne s'évapore pas complètement. Un évaporateur noyé comporte un séparateur de phase liquide et de phase vapeur.

A titre de compresseur, on peut utiliser notamment un compresseur centrifuge à un ou plusieurs étages ou un mini-compresseur centrifuge. Les compresseurs rotatifs, à piston ou à vis peuvent aussi être utilisés.

Selon un autre mode de réalisation, le circuit de compression de vapeur comprend un compresseur à vis, de préférence bi-vis ou mono-vis. En particulier, le circuit de compression de vapeur comprend un compresseur bi-vis, pouvant mettre en oeuvre un flux conséquent d'huile, par exemple jusqu'à 6,3 Us.

Un compresseur centrifuge est caractérisé en ce qu'il utilise des éléments rotatifs pour accélérer radialement le fluide ou la composition de transfert de chaleur ; il comprend typiquement au moins un rotor et un diffuseur logés dans une enceinte. Le fluide de transfert de chaleur ou la composition de transfert de chaleur est introduite au centre du rotor et circule vers la périphérie du rotor en subissant une accélération. Ainsi, d'une part la pression statique augmente dans le rotor, et surtout d'autre part au niveau du diffuseur, la vitesse est convertie en augmentation de la pression statique. Chaque ensemble rotor/diffuseur constitue un étage du compresseur. Les compresseurs centrifuges peuvent comprendre de 1 à 12 étages, selon la pression finale souhaitée et le volume de fluide à traiter. Le taux de compression est défini comme étant le rapport de la pression absolue du fluide/composition de transfert de chaleur en sortie sur la pression absolue dudit fluide ou de ladite composition à l'entrée. La vitesse de rotation pour les grands compresseurs centrifuges va de 3000 à 7000 tours par minute. Les petits compresseurs centrifuges (ou mini-compresseurs centrifuges) fonctionnent généralement à une vitesse de rotation qui va de 40000 à 70000 tours par minute et comportent un rotor de petite taille (généralement moins de 0,15 m). On peut utiliser un rotor à plusieurs étages pour améliorer l'efficacité du compresseur et limiter le coût énergétique (par rapport à un rotor à un seul étage). Pour un système à deux étages, la sortie du premier étage du rotor alimente l'entrée du second rotor. Les deux rotors peuvent être montés sur un axe unique. Chaque étage peut fournir un taux de compression du fluide d'environ 4 sur 1, c'est-à-dire que la pression absolue de sortie peut être égale à environ quatre fois la pression absolue à l'aspiration. Des exemples de compresseurs centrifuges à deux étages, en particulier pour les applications automobiles, sont décrits dans les documents US 5,065,990 et US 5,363,674.

Le compresseur centrifuge peut être entraîné par un moteur électrique ou par une turbine à gaz (par exemple alimentée par les gaz d'échappement d'un véhicule, pour les applications mobiles) ou par engrenage.

L'installation peut comprendre un couplage du détendeur avec une turbine pour générer de l'électricité (cycle de Rankine).

L'installation peut également éventuellement comprendre au moins un circuit de fluide caloporteur utilisé pour transmettre la chaleur (avec ou sans changement d'état) entre le circuit du fluide de transfert de chaleur ou de la composition de transfert de chaleur, et le fluide ou corps à chauffer ou refroidir.

L'installation peut également éventuellement comprendre deux circuits de compression de vapeur (ou plus), contenant des fluides/compositions de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état du fluide/de la composition de transfert de chaleur d'une phase liquide (ou diphasique liquide / vapeur) vers une phase vapeur à une pression relativement faible, puis la compression du fluide/de la composition en phase vapeur jusqu'à une pression relativement élevée, le changement d'état (condensation) du fluide/de la composition de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, via un fluide caloporteur) est absorbée par le fluide/la composition de transfert de chaleur, lors de l'évaporation de cette dernière, et ce à une température relativement faible par rapport à l'environnement. Les procédés de refroidissement comprennent les procédés de climatisation (avec des installations mobiles, par exemple dans des véhicules, ou stationnaires), de réfrigération et de congélation ou de cryogénie. Dans le domaine de la climatisation, on peut citer la climatisation domestique, commerciale ou industrielle, où les équipements utilisés sont soit des chillers, soit des équipements à expansion directe. Dans le domaine de la réfrigération, on peut citer la réfrigération domestique, commerciale, les chambres froides, l'industrie alimentaire, le transport frigorifique (camions, bateaux, containers).

Dans le cas d'un procédé de chauffage, de la chaleur est cédée (directement ou indirectement, via un fluide caloporteur) du fluide/de la composition de transfert de chaleur, lors de la condensation de celui-ci/celle-ci, au fluide ou au corps que l'on chauffe, et ce à une température relativement élevée par rapport à l'environnement. L'installation permettant de mettre en oeuvre le transfert de chaleur est appelée dans ce cas « pompe à chaleur ». Il peut notamment s'agir de pompes à chaleur moyenne et haute température.

Il est possible d'utiliser tout type d'échangeur de chaleur pour la mise en oeuvre des compositions selon l'invention ou composition de transfert de chaleur selon l'invention, et notamment des échangeurs de chaleur à co-courant ou, de préférence, des échangeurs de chaleur à contre-courant. Des échangeurs de type air/réfrigérant peuvent également être utilisés, et sont d'ailleurs préférés.

Selon l'invention, par « échangeur de chaleur à contre-courant », on entend un échangeur de chaleur dans lequel de la chaleur est échangée entre un premier fluide et un deuxième fluide, le premier fluide à l'entrée de l'échangeur échangeant de la chaleur avec le deuxième fluide à la sortie de l'échangeur, et le premier fluide à la sortie de l'échangeur échangeant de la chaleur avec le deuxième fluide à l'entrée de l'échangeur.

Par exemple, les échangeurs de chaleur à contre-courant comprennent les dispositifs dans lesquels le flux du premier fluide et le flux du deuxième fluide sont dans des directions opposées, ou quasiment opposées. Les échangeurs fonctionnant en mode courant croisé à tendance contre-courant sont également compris parmi les échangeurs de chaleur à contre-courant au sens de la présente demande.

Toutefois, selon un mode de réalisation préféré, l'invention prévoit que les procédés de refroidissement et de chauffage, et les installations correspondantes, comprennent un échangeur de chaleur air/réfrigérant, soit au condenseur, soit à l'évaporateur. En effet, les compositions selon l'invention ou composition de transfert de chaleur définies ci-dessus sont particulièrement efficaces avec ces échangeurs de chaleur.

Dans des procédés de « réfrigération à basse température », la température d'entrée de la composition selon l'invention ou composition de transfert de chaleur, à l'évaporateur est de préférence de -45°C à -15°C, notamment de -40°C à -20°C, de manière plus particulièrement préférée de -35°C à -25°C et par exemple d'environ -30°C ou -20°C ; et la température du début de la condensation de la composition selon l'invention ou compositions de transfert de chaleur, au condenseur est de préférence de 25°C à 80°C, notamment de 30°C à 60°C, de manière plus particulièrement préférée de 35°C à 55°C et par exemple d'environ 40°C.

Dans des procédés de « refroidissement à température modérée », la température d'entrée de la composition selon l'invention ou composition de transfert de chaleur, à l'évaporateur est de préférence de -20°C à 10°C, notamment de -15°C à 5°C, de manière plus particulièrement préférée de -10°C à 0°C et par exemple d'environ - 5°C ; et la température du début de la condensation de la composition selon l'invention ou composition de transfert de chaleur, au condenseur est de préférence de 25°C à 80°C, notamment de 30°C à 60°C, de manière plus particulièrement préférée de 35°C à 55°C et par exemple d'environ 50°C. Ces procédés peuvent être des procédés de réfrigération ou de climatisation.

Dans des procédés de « chauffage à température modérée », la température d'entrée de la composition selon l'invention ou composition de transfert de chaleur, à l'évaporateur est de préférence de -20°C à 10°C, notamment de -15°C à 5°C, de manière plus particulièrement préférée de -10°C à 0°C et par exemple d'environ -5°C ; et la température du début de la condensation de la composition selon l'invention ou composition de transfert de chaleur, au condenseur est de préférence de 25°C à 80°C, notamment de 30°C à 60°C, de manière plus particulièrement préférée de 35°C à 55°C et par exemple d'environ 50°C.

La composition selon la présente invention peut servir à remplacer divers fluides de transfert de chaleur dans diverses applications de transfert de chaleur. Par exemple, les compositions selon l'invention peuvent servir à remplacer le R404A, le R452A, le R449A, le R449C, le R448A, le R22, le R134a, le R152a, le R422, le R502, le R407A, le R407F, le R407C, le R1234yf, ou le R1234ze.

Dans certains modes de réalisation, l'invention fournit des compositions qui présentent des performances énergétiques équivalentes ou améliorées par rapport à des fluides de transfert de chaleur usuels, notamment par rapport au R404A.

Selon certains modes de réalisation, la substitution du R404A peut avantageusement s'opérer sans modification de l'installation de transfert de chaleur ni de ses paramètres de fonctionnement. En particulier, la substitution du R404A peut s'opérer sans modification de la technologie des compresseurs.

Corrélativement, les compositions selon l'invention sont particulièrement appropriées pour toutes applications dans lesquelles le R404A sont généralement utilisés. Les compositions de l'invention sont donc particulièrement appropriées pour les applications de transport réfrigéré, et notamment les containers réfrigérés, la climatisation automobile ou le chauffage automobile.

Tous les modes de réalisation décrits ci-dessus peuvent être combinés les uns avec les autres. En particulier, les utilisations susmentionnées peuvent s'appliquer à toutes les compositions préférées ou non de l'invention.

Dans le cadre de l'invention, par « comprise entre x et y », ou « de x à y », on entend un intervalle dans lequel les bornes x et y sont incluses. Par exemple, la gamme «comprise entre 1 et 2% » inclus notamment les valeurs 1 et 2%.

## Revendications

1. Composition comprenant :
- le trifluoroéthylène ;
- le pentafluoroéthane ; et
- au moins un composé C choisi dans le groupe constitué du difluorométhane, du 1,1,1-trifluoropropène, du trifluoroéthane, du 1,1,1,2-tétrafluoroéthane, du monofluoroéthane, du 1,1,1,4,4,4-hexafluorobut-2-ène, du 3,3,4,4,4-pentafluorobut-1-ène, du 2,4,4,4-tétrafluorobut-1-ène, du 1,1,1,3,3-pentafluoropropane, du 2,3,3,3-tétrafluoropropène, du 1,1,2,2-tétrafluoroéthane, du 1,1-difluoroéthane, du 1,1,1,3,3-pentafluorobutane, du butane, du 1,1,1,2,3,3,3-heptafluoropropane, du 1-chloro-trifluoropropène, du 2-méthylbutane, du pentane, du propane, et de leurs mélanges, **caractérisé en ce que** ladite composition a un GWP inférieur à 500 et **en ce que** la teneur pondérale en composé(s) C est supérieure ou égale à 60%.

2. Composition selon la revendication 1, comprenant :
- le trifluoroéthylène (R1123) ;
- le pentafluoroéthane (HFC-125) ; et
- au moins un composé C choisi dans le groupe constitué du 1,1,1,2-tétrafluoroéthane, du 2,3,3,3-tétrafluoropropène, et de leurs mélanges.

3. Composition selon l'une quelconque des revendications 1 ou 2, dans laquelle la teneur pondérale en trifluoroéthylène est supérieure ou égale à 5%, de préférence supérieure ou égale à 10%, de préférence supérieure ou égale à 15%, avantageusement supérieure ou égale à 20%, par exemple supérieure ou égale à 25%, préférentiellement supérieure ou égale à 30%.

4. Composition selon l'une quelconque des revendications 1 à 3, dans laquelle la teneur pondérale en pentafluoroéthane est supérieure ou égale à 1%, de préférence supérieure ou égale à 5%, de préférence supérieure ou égale à 10%, avantageusement supérieure ou égale à 15%, par exemple supérieure ou égale à 20%, préférentiellement supérieure ou égale à 30%.

5. Composition selon l'une quelconque des revendications 1 à 4, dans laquelle la teneur pondérale en composé(s) C est supérieure ou égale à 70%, par exemple supérieure ou égale à 80%.

6. Composition selon l'une quelconque des revendications 1 à 5, **caractérisée en ce qu'**elle comprend de 5% à 35% en poids de trifluoroéthylène ;
- de 1% à 10% en poids de pentafluoroéthane ; et
- de 60% à 90% en poids d'au moins un composé C

7. Composition selon l'une quelconque des revendications 1 à 6, **caractérisée en ce que** le composé C est le 1,1,1,2-tétrafluoroéthane.

8. Composition selon l'une quelconque des revendications 1 à 6, **caractérisée en ce que** le composé C est le 2,3,3,3-tétrafluoropropène.

9. Composition selon la revendication 8, **caractérisée en ce qu'**elle comprend:
- de 15% à 35% en poids de trifluoroéthylène;
- de 1% à 5% en poids de pentafluoroéthane ; et
- de 60% à 84% en poids de 2,3,3,3-tétrafluoropropène

10. Composition selon l'une quelconque des revendications 1 à 6, comprenant :
- le trifluoroéthylène ;
- le pentafluoroéthane ;
- le 1,1,1,2-tétrafluoroéthane ; et
- le 2,3,3,3-tétrafluoropropène

11. Composition selon l'une quelconque des revendications 1 à 10, **caractérisée en ce qu'**elle a un GWP inférieur à 150.

12. Utilisation d'une composition selon l'une quelconque des revendications 1 à 11 comme fluide de transfert de chaleur.

13. Utilisation d'une composition selon l'une quelconque des revendications 1 à 11 en remplacement du R404A, R452A, R449A, R449C, R448A, R22, R134a, R152a, R422, R502, R407A, R407F, R407C, R1234yf, ou R1234ze, de préférence en remplacement du R404A.

14. Composition de transfert de chaleur comprenant la composition selon l'une quelconque des revendications 1 à 11, et au moins un additif notamment choisi parmi les nanoparticules, les stabilisants, les tensioactifs, les agents traceurs, les agents fluorescents, les agents odorants, les lubrifiants, de préférence à base d'esters de polyol, et les agents de solubilisation.

15. Utilisation d'une composition selon l'une quelconque des revendications 1 à 11, ou d'une composition de transfert de chaleur selon la revendication 14, dans un système de transfert de chaleur contenant un circuit de compression de vapeur, en particulier dans le transport frigorifique, dans la climatisation automobile, dans le chauffage automobile.

16. Installation de transfert de chaleur comprenant un circuit de compression de vapeur contenant la composition selon l'une quelconque des revendications 1 à 11 ou la composition de transfert de chaleur selon la revendication 14, en particulier choisie parmi les installations mobiles ou stationnaires de chauffage par pompe à chaleur, de climatisation, de réfrigération, de congélation et les moteurs thermiques.

17. Procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est une composition selon l'une des revendications 1 à 11.

## Patentansprüche

1. Zusammensetzung, umfassend:
- Trifluorethylen;
- Pentafluorethan und
- mindestens eine Verbindung C aus der Gruppe bestehend aus Difluormethan, 1,1,1-Trifluorpropen, Trifluorethan, 1,1,1,2-Tetrafluorethan, Monofluorethan, 1,1,1,4,4,4-Hexafluorbut-2-en, 3,3,4,4,4-Pentafluorbut-1-en, 2,4,4,4-Tetrafluorbut-1-en, 1,1,1,3,3-Pentafluorpropan, 2,3,3,3-Tetrafluorpropen, 1,1,2,2-Tetrafluorethan, 1,1-Difluorethan, 1,1,1,3,3-Pentafluorbutan, Butan, 1,1,1,2,3,3,3-Heptafluorpropan, 1-Chlortrifluorpropen, 2-Methylbutan, Pentan, Propan und Mischungen davon, **dadurch gekennzeichnet, dass** die Zusammensetzung ein GWP von weniger als 500 aufweist und dass der Gewichtsgehalt an Verbindung(en) C größer oder gleich 60 % ist.

2. Zusammensetzung nach Anspruch 1, umfassend:
- Trifluorethylen (R1123);
- Pentafluorethan (H-FKW 125) und
- mindestens eine Verbindung C aus der Gruppe bestehend aus 1,1,1,2-Tetrafluorethan, 2,3,3,3-Tetrafluorpropen und Mischungen davon.

3. Zusammensetzung nach Anspruch 1 oder 2, in der der Gewichtsgehalt an Trifluorethylen größer oder gleich 5 %, vorzugsweise größer oder gleich 10 %, vorzugsweise größer oder gleich 15 %, vorteilhafterweise größer oder gleich 20 %, beispielsweise größer oder gleich 25 %, bevorzugt größer oder gleich 30 %, ist.

4. Zusammensetzung nach einem der Ansprüche 1 bis 3, in der der Gewichtsgehalt an Pentafluorethan größer oder gleich 1 %, vorzugsweise größer oder gleich 5 %, vorzugsweise größer oder gleich 10 %, vorteilhafterweise größer oder gleich 15 %, beispielsweise größer oder gleich 20 %, bevorzugt größer oder gleich 30 %, ist.

5. Zusammensetzung nach einem der Ansprüche 1 bis 4, in der der Gewichtsgehalt an Verbindung(en) C größer oder gleich 70 %, beispielsweise größer oder gleich 80 %, ist.

6. Zusammensetzung nach einem der Ansprüche 1 bis 5, **dadurch gekennzeichnet, dass** sie 5 bis 35 Gew.-% Trifluorethylen;
- 1 bis 10 Gew.-% Pentafluorethan und
- 60 bis 90 Gew.-% mindestens einer Verbindung C umfasst.

7. Zusammensetzung nach einem der Ansprüche 1 bis 6, **dadurch gekennzeichnet, dass** es sich bei der Verbindung C um 1,1,1,2-Tetrafluorethan handelt.

8. Zusammensetzung nach einem der Ansprüche 1 bis 6, **dadurch gekennzeichnet, dass** es sich bei der Verbindung C um 2,3,3,3-Tetrafluorpropen handelt.

9. Zusammensetzung nach Anspruch 8, **dadurch gekennzeichnet, dass** sie
- 15 bis 35 Gew.-% Trifluorethylen;
- 1 bis 5 Gew.-% Pentafluorethan und
- 60 bis 84 Gew.-% 2,3,3,3-Tetrafluorpropen umfasst.

10. Zusammensetzung nach einem der Ansprüche 1 bis 6, umfassend:
- Trifluorethylen;
- Pentafluorethan;
- 1,1,1,2-Tetrafluorethan und
- 2,3,3,3-Tetrafluorpropen.

11. Zusammensetzung nach einem der Ansprüche 1 bis 10, **dadurch gekennzeichnet, dass** sie ein GWP von weniger als 150 aufweist.

12. Verwendung einer Zusammensetzung nach einem der Ansprüche 1 bis 11 als Wärmeübertragungsfluid.

13. Verwendung einer Zusammensetzung nach einem der Ansprüche 1 bis 11 als Ersatz für R404A, R452A, R449A, R449C, R448A, R22, R134a, R152a, R422, R502, R407A, R407F, R407C, R1234yf oder R1234ze, vorzugsweise als Ersatz für R404A.

14. Wärmeübertragungszusammensetzung, umfassend die Zusammensetzung nach einem der Ansprüche 1 bis 11 und mindestens ein Additiv, insbesondere ausgewählt aus Nanopartikeln, Stabilisatoren, Tensiden, Tracern, Fluoreszenzmitteln, Geruchsmitteln, Schmiermitteln, vorzugsweise auf Basis von Polyolestern, und Solubilisatoren.

15. Verwendung einer Zusammensetzung nach einem der Ansprüche 1 bis 11 oder einer Wärmeübertragungszusammensetzung nach Anspruch 14 in einem Wärmeübertragungssystem mit einem Dampfverdichtungskreislauf, insbesondere beim Kältetransport, bei der Fahrzeugklimatisierung oder bei der Fahrzeugheizung.

16. Wärmeübertragungsanlage, umfassend einen Dampfverdichtungskreislauf, der die Zusammensetzung nach einem der Ansprüche 1 bis 11 oder die Wärmeübertragungszusammensetzung nach Anspruch 14 enthält, insbesondere ausgewählt aus mobilen oder stationären Wärmepumpenheizanlagen, Klimaanlagen, Kühlanlagen, Gefrieranlagen und Wärmekraftmaschinen.

17. Verfahren zum Erwärmen oder Abkühlen eines Fluids oder eines Körpers mittels eines Dampfverdichtungskreislaufs, der ein Wärmeübertragungsfluid enthält, bei dem man nacheinander das Wärmeübertragungsfluid verdampft, das Wärmeübertragungsfluid verdichtet, das Wärmeübertragungsfluid kondensiert und das Wärmeübertragungsfluid entspannt, wobei es sich bei dem Wärmeübertragungsfluid um eine Zusammensetzung nach einem der Ansprüche 1 bis 11 handelt.

## Claims

1. Composition comprising:
- trifluoroethylene;
- pentafluoroethane; and
- at least one compound C chosen from the group constituted by difluoromethane, 1,1,1-trifluoropropene, trifluoroethane, 1,1,1,2-tetrafluoroethane, monofluoroethane, 1,1,1,4,4,4-hexafluorobut-2-ene, 3,3,4,4,4-pentafluorobut-1-ene, 2,4,4,4-tetrafluorobut-1-ene, 1,1,1,3,3-pentafluoropropane, 2,3,3,3-tetrafluoropropene, 1,1,2,2-tetrafluoroethane, 1,1-difluoroethane, 1,1,1,3,3-pentafluorobutane, butane, 1,1,1,2,3,3,3-heptafluoropropane, 1-chlorotrifluoropropene, 2-methylbutane, pentane, propane, and mixtures thereof, **characterized in that** said composition has a GWP of less than 500 and **in that** the weight content of compound(s) C is greater than or equal to 60%.

2. Composition according to Claim 1, comprising:
- trifluoroethylene (R1123);
- pentafluoroethane (HFC-125); and
- at least one compound C chosen from the group constituted by 1,1,1,2-tetrafluoroethane, 2,3,3,3-tetrafluoropropene, and mixtures thereof.

3. Composition according to either of Claims 1 and 2, in which the weight content of trifluoroethylene is greater than or equal to 5%, preferably greater than or equal to 10%, preferably greater than or equal to 15%, advantageously greater than or equal to 20%, for example greater than or equal to 25%, preferentially greater than or equal to 30%.

4. Composition according to any one of Claims 1 to 3, in which the weight content of pentafluoroethane is greater than or equal to 1%, preferably greater than or equal to 5%, preferably greater than or equal to 10%, advantageously greater than or equal to 15%, for example greater than or equal to 20%, preferentially greater than or equal to 30%.

5. Composition according to any one of Claims 1 to 4, in which the weight content of compound(s) C is greater than or equal to 70%, for example greater than or equal to 80%.

6. Composition according to any one of Claims 1 to 5, **characterized in that** it comprises from 5% to 35% by weight of trifluoroethylene;
- from 1% to 10% by weight of pentafluoroethane; and
- from 60% to 90% by weight of at least one compound C.

7. Composition according to any one of Claims 1 to 6, **characterized in that** compound C is 1,1,1,2-tetrafluoroethane.

8. Composition according to any one of Claims 1 to 6, **characterized in that** compound C is 2,3,3,3-tetrafluoropropene.

9. Composition according to Claim 8, **characterized in that** it comprises:
- from 15% to 35% by weight of trifluoroethylene;
- from 1% to 5% by weight of pentafluoroethane; and
- from 60% to 84% by weight of 2,3,3,3-tetrafluoropropene.

10. Composition according to any one of Claims 1 to 6, comprising:
- trifluoroethylene;
- pentafluoroethane;
- 1,1,1,2-tetrafluoroethane; and
- 2,3,3,3-tetrafluoropropene.

11. Composition according to any one of Claims 1 to 10, **characterized in that** it has a GWP of less than 150.

12. Use of a composition according to any one of Claims 1 to 11 as a heat-transfer fluid.

13. Use of a composition according to any one of Claims 1 to 11 as replacement for R404A, R452A, R449A, R449C, R448A, R22, R134a, R152a, R422, R502, R407A, R407F, R407C, R1234yf, or R1234ze, preferably as replacement for R404A.

14. Heat-transfer composition comprising the composition according to any one of Claims 1 to 11 and at least one additive notably chosen from nanoparticles, stabilizers, surfactants, tracing agents, fluorescent agents, odorous agents, lubricants, preferably based on polyol esters, and solubilizing agents.

15. Use of a composition according to any one of Claims 1 to 11 or of a heat-transfer composition according to Claim 14 in a heat-transfer system containing a vapour compression circuit, in particular in refrigerated transport, in motor vehicle air conditioning or in motor vehicle heating.

16. Heat-transfer facility comprising a vapour compression circuit containing the composition according to any one of Claims 1 to 11 or the heat-transfer composition according to Claim 14, in particular chosen from mobile or stationary facilities for heating by heat pump, for air conditioning, for refrigeration and for freezing, and heat engines.

17. Process for heating or cooling a fluid or a body by means of a vapour compression circuit containing a heat-transfer fluid, said process successively comprising the evaporation of the heat-transfer fluid, the compression of the heat-transfer fluid, the condensation of the heat-transfer fluid and the expansion of the heat-transfer fluid, in which the heat-transfer fluid is a composition according to one of Claims 1 to 11.
